(19) Europäisches Patentamt

European Patent Office

Office européen des brevets

(11) **EP 0 923 181 B1**

(12) **EUROPEAN PATENT SPECIFICATION**

(45) Date of publication and mention
of the grant of the patent:
**31.03.2004 Bulletin 2004/14**

(51) Int Cl.⁷: **H02J 3/18**, H02J 3/12

(21) Application number: **97309910.4**

(22) Date of filing: **09.12.1997**

(54) **Multifunction adaptive controls for tapswitches and capacitors**

Adaptive Multifunktionssteuerungen für Stufenschalter und Kondensatoren

Commandes multifunctions adaptatives pour commutateurs à gradins et condensateurs

(84) Designated Contracting States:
**AT BE CH DE DK ES FI FR GB GR IE IT LI LU MC NL PT SE**

(43) Date of publication of application:
**16.06.1999 Bulletin 1999/24**

(73) Proprietor: **Beckwith, Robert Wallace
Clearwater, Florida 34619-1007 (US)**

(72) Inventor: **Beckwith, Robert Wallace
Clearwater, Florida 34619-1007 (US)**

(74) Representative: **Dawson, Elizabeth Ann et al
A.A. Thornton & Co.
235 High Holborn
London WC1V 7LE (GB)**

(56) References cited:
**EP-A- 0 495 590          EP-A- 0 704 953
US-A- 5 541 498**

## Description

Load tapchanging transformers are located in electric power transmission substations where higher voltages are reduced and regulated before supplying subtransmission systems. They are also found at other substations supplying regulated intermediate voltages to power distribution lines. Alternatively load tapchanging regulators are sometimes used with fixed ratio voltage reducing transformers in place of load tapchanging transformers at distribution stations where the combination supplies regulated voltages to each phase of outgoing power distribution lines. Load tapchanging regulators are also found at intermediate points on longer distribution lines for re-regulation of the voltages. Intermediate voltages are stepped down to lower voltages, serving users of electric power, by fixed ration transformers located along said distribution lines.

Autotransformers with switched taps for voltage regulation, they are commonly simply referred to as "regulators". The term "LTC transformer" is commonly used to distinguish two winding voltage changing transformers with switched taps for voltage regulation from fixed ratio voltage changing transformers. These conventions in terminology will be followed herein.

Controls for load tap changing transformers and regulators generally have features as called for in ANSI standards C57.15-1986 for regulators and C57.12.10 for LTC transformers. The standards refers to settable bandwidths of up to 6 volts total bandwidth, around an also settable center voltage. One of two types of out-of-band timers is generally supplied, each having a time out value settable up to 120 seconds after which a raise or lower tap position command is made to motor driven tapswitches. A first type of timer times linearly when the voltage is above or below the band and resets immediately whenever the voltage returns to within the band. A second type, known as an integrating timer times up linearly whenever the voltage is outside the band and times down at the same rate whenever the voltage is within the band.

Tapswitch life is found to be dependent on the rate of switch operation and on the square of current levels each time the switch operates. It is therefore, a concern for users of present art load tapchanger controls (LTC's) to attempt to set the time out value and the bandwidth values so as to obtain satisfactory voltage regulation yet not cause more than a desired number of tapchanges in a given time. This is often found in practice to be a long, laborious and generally unsatisfactory procedure. Present art generally does not take the level of the current into account, except to block the tapchanger entirely above some selected current level.

Switched power factor correction capacitors are also used across the secondaries of substation LTC transformers. Switching of these capacitors is generally accomplished using means separated from LTC transformer controls. This reportedly often results in undesired interactions between capacitor switching and the LTC tapswitching operation.

Adaptive Capacitor Controls (ACC's) are now available using the inventions disclosed in the patents and patent applications listed below which require no setpoints and no human control. ACC's are used to switch poletop and padmounted power factor correction capacitor banks located along power distribution lines. These ACC controls adapt to factors such as a) to the line impedance at point of connection to the distribution line, and b) to the variation in electric customer loads nearby the point of capacitor connection to the distribution line. The result of ACC application to distribution lines fed by distribution power transformers is improved voltage regulation along the distribution lines and reduced Var flow through the distribution substation transformers.

The industry has recently focussed on a problem commonly referred to as "voltage collapse" in which the voltage decreases slowly, as compared to a fault where voltages are affected suddenly. The term 'slowly' indicates a voltage decay period measured in minutes and seconds. This sometimes follows a fault whereafter remaining energized circuitry is unable to carry the load. At other times voltage collapse appears to be caused by a gradual buildup of load in excess of available generation and power delivery circuitry. It is generally found that present art supervisory control and data acquisition (SCADA) systems provide insufficient information to give any more than a superficial explanation of the voltage collapse phenomena. The ACC's help alleviate this problem by switching capacitors ON within one second as voltages collapse to a limit voltage generally set 5% below nominal voltage.

Downsizing of electric utilities has resulted in work burdens on fewer personnel which, in turn, calls for more automated equipment. At the same time competition between utilities resulting from the Energy Policy Act of 1992 has led to requirements to carry more power through distribution transformers and lines. Again a greater use of automation is indicated.

U. S. Patent 5,422,561 issued to Williams et al describes a radio control scheme of distribution line capacitor control in trial use in Southern California. This scheme reads voltages at lower voltage locations and telemeters these readings, generally by radio, to a central location. At the central location a mathematical model of the distribution system is used to compute whether or not each capacitor can be connected or disconnected without having the voltages after switching go outside limits established by state statutes. This scheme has the very labor intensive requirement of establishing the mathematical model required for its operation. Even more difficult is the continuing updating of this model that is required by the continual restructuring of distribution lines as customer loads shift. The system has been reported in the press as having difficulty with false operation of capacitor switches as truckers pass the capacitor locations with their licensed radios in use.

EP-A-0704953 discloses a load management and control apparatus having the features of the preamble of claim 1, whose purpose is to prevent frequent tap changing operation of the transformer. The control is based primarily on the impedance from the high side of the LTC transformer and the source of generation, and switches capacitors located at the secondary of the LTC transformer, ie at the substation.

EP-A-0495590 discloses a voltage or reactive power control method and control device therefor. Here fuzzy logic is used to find the optimum strategy to keep the actual voltage closest to the reference voltage whilst minimising the number of tap position changes.

CROSS REFERENCES TO RELATED APPLICATIONS

Provisional Application Serial No. 60/002,988 filed on 8/30/95 by Robert W. Beckwith, the inventor herein, entitled "AN ADAPTIVE CONTROL FOR LOAD TAPCHANGING TRANSFORMERS AND REGULATORS" introduced the inventive concepts presented herein. These inventive concepts are explained herein in greater detail and are expanded to include inventive ways of performing other functions capable of being provided by a single microprocessor wherein the functions are combined using a single program.

U.S, Patent No. 5,315,527, METHOD AND APPARATUS PROVIDING HALF-CYCLE DIGITIZATION OF AC SIGNALS BY AN ANALOG-TO-DIGITAL CONVERTER, issued to Robert W. Beckwith, the inventor herein, describes apparatus and methods for sensing only positive half cycles of alternating current (AC) signals.

U.S. Patent No. 5,544,064, APPARATUS AND METHOD FOR SAMPLING SIGNALS SYNCHRONOUS WITH ANALOG-TO-DIGITAL CONVERTER, by Robert W. Beckwith, the inverter herein, describes apparatus and methods useful in LTC controls 62 for obtaining samples of an AC wave synchronous with a free running analog to digital converter (ADC).

The present invention combines use of the half wave technology of U. S. Patent No. 5,315,527 together with the synchronous linear technology of U. S. Patent No. 5,544,064 in greatly reducing the hardware and software requirements and at the same time greatly increasing the operating speed of an adaptive multifunction control for use in an electric utility substation.

U. S. Patent No. 5,541,498, DISTRIBUTION CIRCUIT VAR MANAGEMENT USING ADAPTIVE CAPACITOR CONTROL, issued to Robert W. Beckwith , the inverter herein, describes apparatus and methods of using LTC control apparatus having a Var bias to beneficently influence the switching of adaptive capacitor controls (ACC's). This invention describes the ACC's and system control of Vars using a variable voltage substation source which influences the switching of ACC's without the use of communications. The present invention fulfills the control of substation voltage as disclosed in U. S. Patent 5,541,498 and adds the function of control of substation controls so as to provide overall Var control of an electric utility system by coordinated capacitor switching.

U. S. Patent No. 5,530,338, LOAD TAPCHANGER PARALLELING BY DAISY CHAIN COMPARISON OF LOAD CURRENTS, issued to Robert W. Beckwith the inverter herein, describes a method of paralleling load tapchanging transformers by comparing the relative phase angles of pairs of adjacent transformer load currents connected in daisy chain fashion around a ring. This patent requires accurate comparison of the relative phase of two AC currents; a requirement met in a simple and very accurate way by the present invention. Incorporation of the daisy chain paralleling becomes an easily added function provided by modest additions to the microprocessor program.

U. S. Patent application Serial No. 493,423, A METHOD FOR OBTAINING THE FUNDAMENTAL AND ODD HARMONIC COMPONENTS OF AC SIGNALS, filed by Robert W. Beckwith, the inverter herein, on June 19, 1995 describes methods for obtaining the fundamental component and odd harmonics of a half wave AC signal. The principles for measurement of the fundamental component of AC currents and voltages are used in the present invention.

U. S. Patent application Serial No. 152,001, MICROCONTROLLER-BASED TAPCHANGER EMPLOYING HALF-WAVE DIGITIZATION OF AC SIGNALS, filed by Murty Yalla, Robert W. Beckwith, the inverter herein, et al on November 9, 1993 describes apparatus for keeping track of tap positions in tapchanging transformers and regulators which requires sensing of AC voltage states. In certain applications the apparatus and methods described by this application cannot sense tapchanges by SCADA communications not involving said apparatus and not causing changes of AC voltage states. The present invention includes different apparatus which circumvents these problems and provides reliable keep track of tap positions of tapchanging transformers.

SUMMARY OF THE INVENTION

A multifunction control relay providing apparatus and methods for implementing automatically adaptive switching of load tapchanging transformers and regulators, thereby decreasing the number of tapchanges, measuring and using Vars to bias the regulated voltage to cause adaptive capacitors controls to switch distribution line capacitors, controlling the switching of substation capacitors, recording and communicating data externally.

The foregoing features and advantages of the present invention will be apparent from the following more particular description. The accompanying drawings, listed hereinbelow, are useful in explaining the invention.

Fig. 1 is a drawing showing an ACC connected to an electrical power distribution circuit, together with an LTC transformer using the inventive control in a substation supplying voltage to ACC's;

Fig. 2 expands the substation portion of Fig. 1 to include the controlled switching of substation capacitor banks;

Fig. 3 is a drawing showing an ACC connected to an electrical power distribution circuit, together with a regulator using the inventive control in a substation supplying voltage to ACC's;

Fig. 4 is a diagram of a system consisting of a potential device and a current transformer providing inputs to an LTC control, in turn having outputs to power system apparatus;

Fig. 5 is a more detailed diagram of a single chip LTC control having a voltage input and a current transformer input using a resistive burden;

Fig. 6 is a more detailed diagram of a single chip LTC control having a voltage input and a current transformer input using a capacitive burden;

Fig. 7 is a more detailed diagram of a single chip LTC control having a voltage input and a center tapped current transformer input using resistive burdens and providing two ADC inputs for measurement of the entire current signal;

Fig. 8 is a diagram showing one cycle of AC voltage and current waves wherein the positive half cycle is sampled and the negative half cycle is suppressed and, if sampled, yields samples whose values are zero;

Fig. 9 is a flow diagram describing the SLIM programming method, useful in LTC controls, for obtaining measurements of an AC wave, making computations, performing tapchanges and communicating to a computer network;

Fig. 10 shows voltage and current time lines for measuring voltage amplitude and combining with half wave current signals using a resistive burden to obtain Watts and Vars;

Fig. 11 shows voltage and current time lines for measuring voltage amplitude and combining with a half wave current signal using capacitive burdens to obtain Watts and Vars;

Fig. 12 shows voltage and current time lines for measuring voltage amplitude and combining with a full wave current signal using resistive burdens to obtain Watts and Vars;

Fig. 13 illustrates a list of values of the sine of an angle arranged to be read in a circle divided into 12 sectors each having the same number of equally spaced values.

Fig. 14 shows a first representation of ▲H as a function of V - v for v between either V and VU or V and VL as useful in explaining adaptive features of the present invention;

Fig. 15 shows a second representation of ▲H as a function of V - v for v between either V and VU or V and VL as useful in explaining adaptive features of the present invention;

Fig. 16 is a diagram useful in describing the inventive Var management system wherein the substation voltage influences the switching of distribution circuit ACC's.

Fig. 17 contains diagrams useful in describing the controlled switching of substation capacitor banks.

Fig. 18 is a diagram useful in explaining the combined influence on ACC's together with switching substation capacitors.

Fig. 19 is a one line diagram of a transmission line feeding a load tapchanging transformer in turn feeding three distribution lines having line regulators, customer loads and ACC's showing restricted flow Var flow paths.

Fig. 20 is a three line diagram of a transmission line feeding a step-down transformer and load tapchanging regulator in each phase of one distribution line having line regulators, customer loads and ACC's illustrating further restricted Var flow paths.

Fig. 21 shows automatic voltage reduction for load management.

Fig. 22 shows lengthening of the "H" timeout as a function of transformer load current;

Fig. 23 is an isometric view of the inventive control having a two way infra-red port and using an external computer as the man-machine interface and also the addition of a wireless modem.

Fig. 24 shows a test setup involving three single phase regulators;

Fig. 25 shows an isolated 120/240 VAC service drop to the experimental setup of Fig. 24;

Fig. 26 is a 24 hour plot of the output voltage of a regulator using the tapchanging control techniques;

Fig. 27 is a 24 hour plot of the two minute average values of VRQF of a regulator using the tapchanging control techniques.

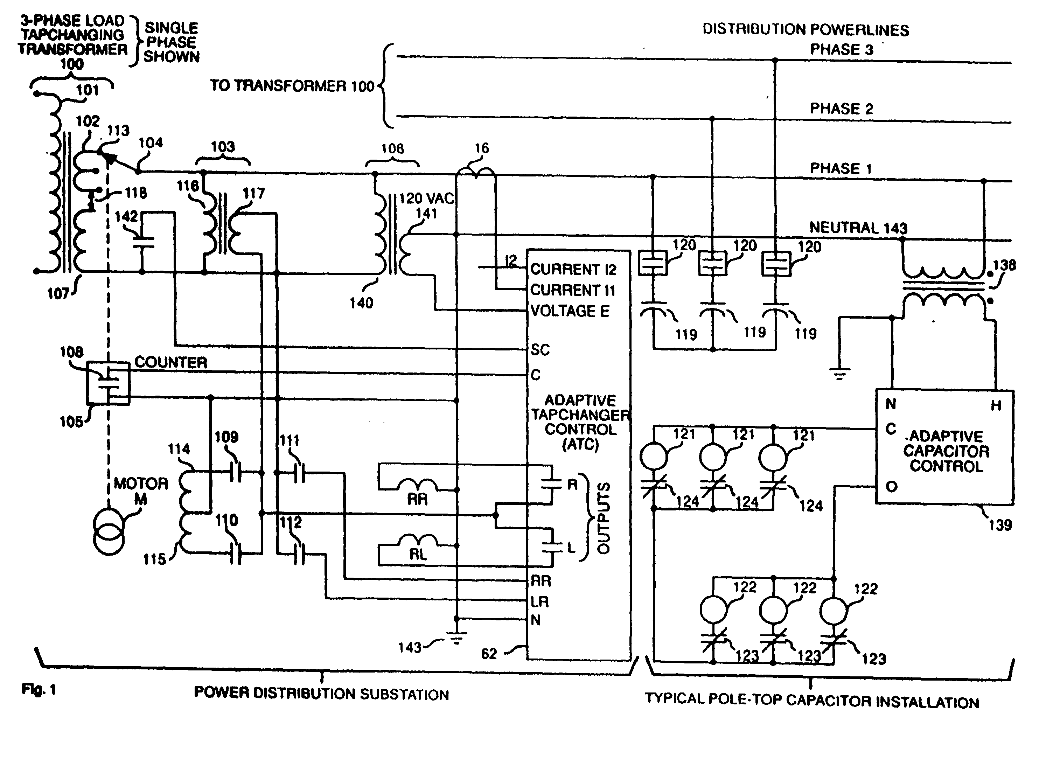

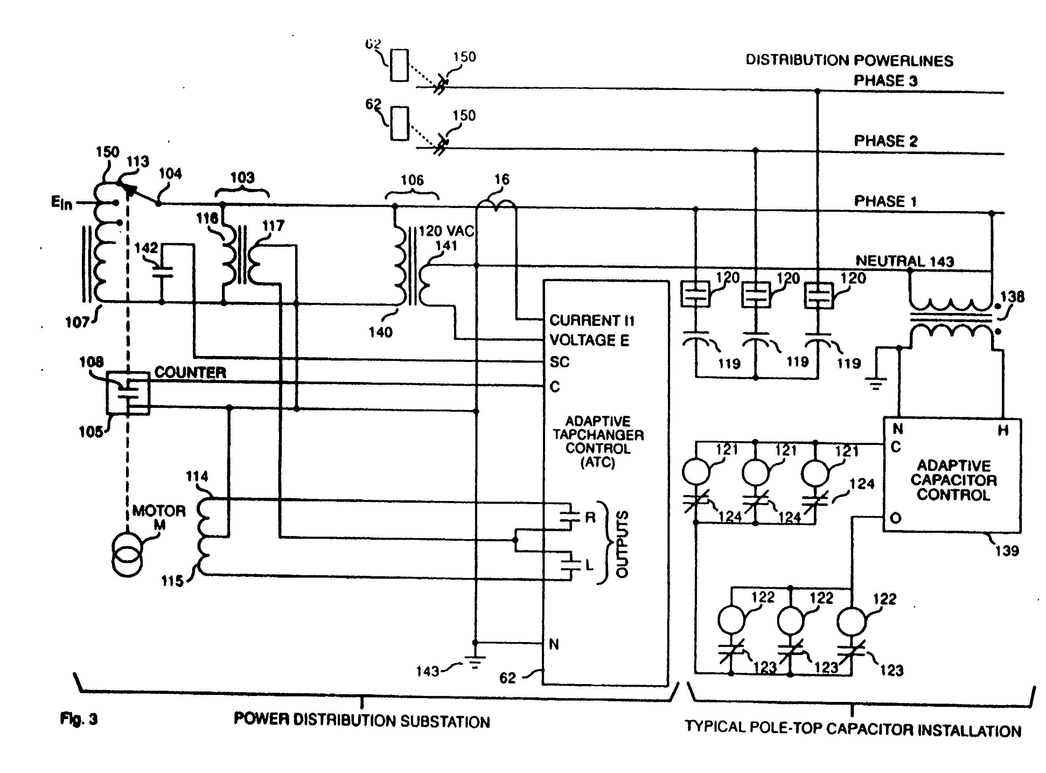

This invention discloses inventive apparatus and methods useful in adaptive tapchanger controls (ATC's) 62 for load tapchanging switches 104 on electric power LTC transformers 100 and regulators 150 (Please see Figs. 1 and 3). Transformers 100 and regulators 150 are hereinafter referred to collectively as 'controlled devices'. Although certain differences exist in practice between controls for LTC transformers and regulators, controls 62 will be considered herein as being useable with either LTC transformers or regulators for the purpose of illustrating the present invention.

The operation of an adaptive capacitor control 139 (ACC) controlling pole top capacitor banks 119 on distribution lines is shown in Figs. 1 and 3. It has been found that the inventive adaptive methods of U. S. Patent 5,541,498 can not be matched by manual operation of the controlled capacitor switches 120. This has led to use of inventive extensions of said adaptive methods in the present invention of ATC,s 62 for use with controlled devices. The present invention reduces to a minimum the number of setpoints to be entered into ATC's at time of installation. The present invention also eliminates the need for ongoing manual operation of tapswitches and in fact requires that such operation generally be blocked as being disruptive to optimum use of said tapswitches.

The voltage regulation quality factor, VRQF, by a controlled device is defined herein as the square root of the average of the sum of the squares of voltage deviations ▲E above and below a setpoint voltage ES. See equation 1) below.

$$1) \qquad VRQF = ((\Sigma(EM - ES)_2)/NM)^{\frac{1}{2}},$$

where

$$2) \qquad \blacktriangle E = EM - ES$$

where ES is the voltage setpoint and EM is any voltage measurement.

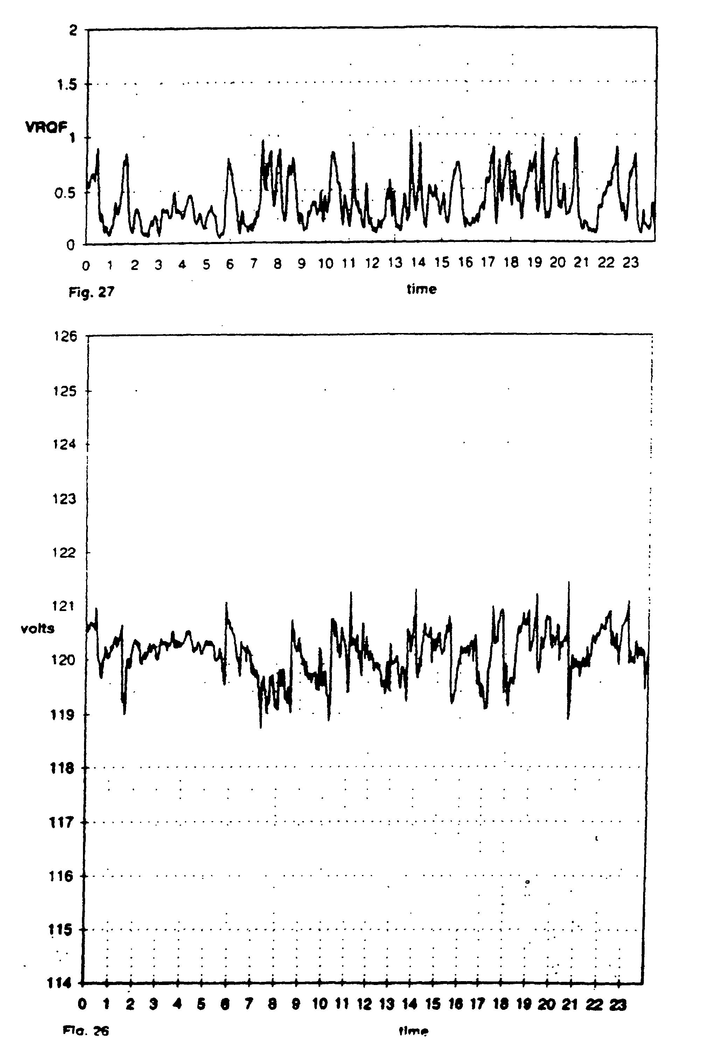

The deviations ▲E are measured as often as once per AC cycle in controls 62 which sense voltage only. The deviations ▲E are typically measured 20 times per second in said controls 62 measuring both voltage and load current. The average of the squares is obtained using short term and long term recursive equations. The short term equation has a time constant in the order of minutes and is useful in displaying the variations in VRQF during a day, as shown in Fig. 27. These short term values of VRQF are then averaged using time constants preferably in the order of one week and used with counts of tapswitch operations to adaptively bring the number of tapswitch operations to a desired weekly average per day or alternatively to bring the quality of voltage control to a desired value.

A count of cycles of the input AC voltage signals is useful as measures of time by said microprocessor program. Descriptions of this method of timekeeping is given hereinunder.

Fig. 1 shows a power distribution substation circuit providing adaptive control of load tapchanging transformers 100 (shown for simplicity in single phase form). Transformers 100 have three phase primary windings 101, often at higher voltages of 69, 115 or 132 Kv, phase to phase. Transformer 100 secondaries consist of main windings 107 and tapped windings 102. Windings 102 are connected by switches 118 to buck or boost the voltages of said main windings 107.

Windings 102 have taps 113 on each of three phases selected by three phase tapswitches 104, in turn driven by motors M having drive mechanisms 105 with counter contacts 108; counter contacts 108 closing briefly when each tapchange is mechanically committed. Motors M drive mechanism further selectively have contacts 142 movable so as to be closed only on a tap position selected as one being often used and therefore suitable for frequent correction of a tapchange keep track procedure. Motors M are powered by single phase transformers 103 having primary 116 receiving voltages from phase 1 to neutral 143 of the voltage controlled outputs of transformers 100 together with secondaries 117 supplying motor M voltages, generally at lower voltages of 120 or 240 Vac. Motors M may have windings 114 which, when powered, causes motors M to run in the direction of increasing tap position and having a winding 115 which, when powered, causes motors M to run in the direction of decreasing tap position. In any instance, motor direction is obtained by use of one or the other of two contact closures, R and L.

Transformers 106 provide 120 Vac from secondary windings 141 to said LTC controls 62 in response to primary 140 connections between phase 1 and neutral 143. Said LTC controls 62 provide output raise (R) contact means and lower (L) contact means which correspondingly operate motor starter relay means RR and RL. Contact means 109 on said motor starter relay RR cause said motors M to move in the raise direction when said relays RR are operated and contact means 110 on said motor starter relays RL cause said motors M to move in the lower direction when said relays RL are operated. Isolated motor starter RR contact means 111 closes upon operation of said starters RR connecting said LTC controls 62 binary inputs RR to neutral 143 and isolated motor starter RL contacts 112 close upon operation of starters RL connecting LTC 62 binary inputs LR to neutral 143. Said LTC controls 62 sense closure of contacts 111, followed by closure of counter contacts 108 and increases the record of tap position by one. Said LTC controls 62 further sense closure of contacts 112, followed by closure of counter contacts 108 and decrease the record of tap position by one. Adjustable switches 142 selectively are set to a frequently used tap position and are connected to said LTC control 62 binary terminals SC. The identities of said frequently used tap positions are entered into LTC controls 62; and, LTC controls 62 correct the records of tap positions, if necessary, each time the tapswitches are on said frequently used tap positions.

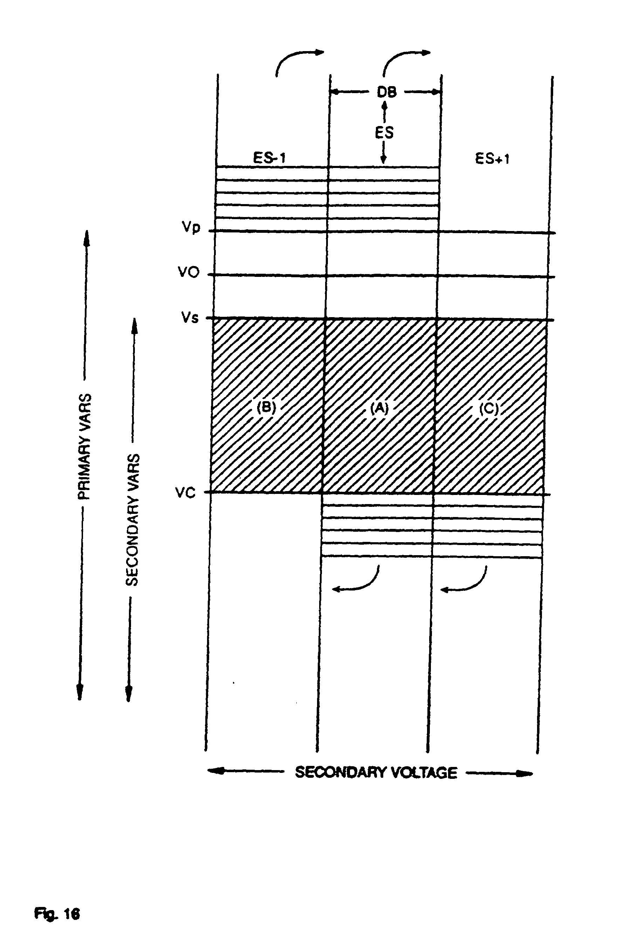

Tapswitch knowledge is used hereinbelow to determine VP, the vars flowing in or out of an LTC transformer primary. See discussions referring to Fig. 16.

Fig. 1 further shows typical pole-top capacitor installations together with phases 1, 2 and 3 and neutral 143 conductors of power distribution lines fed from said power distribution substations. Phases 1 and neutral 143 conductors are shown connected appropriately to the substation circuitry. Phases 2 and 3 are not shown connected to transformers 100; for simplicity transformer 100 is represented in single phase form. ACC's 139 receive power from phase 1 through stepdown transformers 138. Note that at other capacitor locations, transformers 138 may alternatively be connected to phases 2 or 3. Note that ACC 139 has terminals designated N, H, O and C representing Neutral, Hot, Open and Close. Hereinafter the expanded expressions for these terminals; Neutral, Hot, Open and Close will be used. The state of the capacitor switches 120 will be referred to as OPEN or OPENED and CLOSE or CLOSED. Power factor correction capacitors 119 are shown connectable through contacts 120 to distribution circuits phases 1, 2 and 3. Said ACC's 139 selectively close circuits from said ACC 139 terminals Hot to Close to operate magnetic devices 121, thereby closing contacts 120 and connecting the capacitors 119 to said distribution powerlines and closes circuits from said ACC 139 terminals Hot to Open to operate magnetic devices 122, thereby opening contacts 120 and disconnecting said capacitors 119 from said distribution powerlines.

After said devices 121 have performed their closing functions, they latch closed and contacts 124 open, removing power from said devices 121. After said devices 122 have performed their opening functions, they latch open and contacts 123 open, removing power from said devices 122.

U. S. Patent No. 5,541,498 describes methods wherein the apparatus shown in Fig. 1 is used to control Vars flowing through transformer 100. The present invention provides additional adaptive features for LTC control 62 to reduce the number of tapswitch operations both in fulfilling the Var bias requirements described in U. S. Patent No. 5,541,498 and for other regulation of substation output voltages where Var bias is not used.

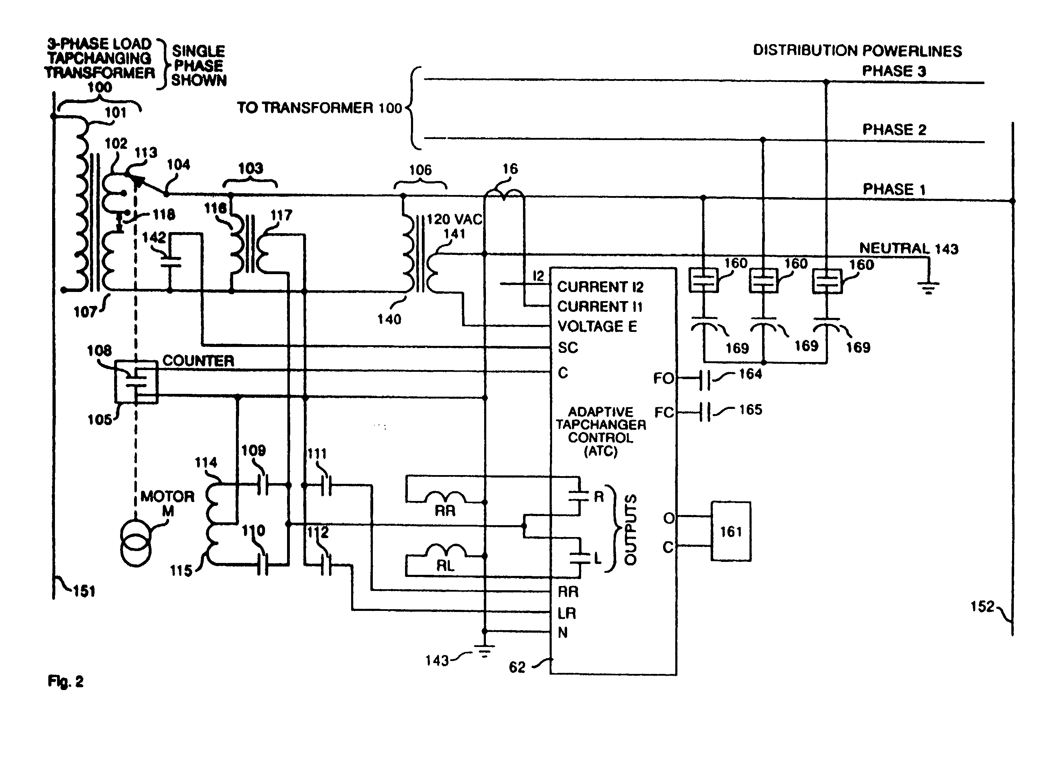

Fig. 2 expands the substation portion of Fig. 1 to show the switching of substation capacitor banks. Three phase bus 151, shown in single phase form, feeds power to transformer 100. Bus 151 voltage is generally at higher voltages of 765 to 230 kilovolts at a transmission substation and 120 to 69 kilovolts at a distribution station. Three phase bus 152, shown in single phase form, is connected to the regulated output voltage of transformer 100 so as to feed more than one line radiating outward. Secondary bus voltage is generally at higher voltages of 230 to 69 kilovolts at a transmission station and at intermediate voltages of 4 to 34 kilovolts at a distribution station.

The term "wheeling of electric power" refers to the practice of electric utilities to competitively sell power to customers not directly fed by the selling utilities' transmission lines. The 1994 Energy act encourages utilities to wheel power through their transmission lines. Capacitors 169 are often used at transmission stations to supply the Vars required by the wheeling of power through transmission stations. Prior art practice has been to switch the capacitors CLOSED and OPEN as required to maintain the voltage level which otherwise tends to lower as the result of power wheeling. Prior art LTC controls then corrected for the voltage increase as the capacitors 169 switched OPEN and for the decrease in voltage as capacitors 169 switch CLOSED. Under prior art practice, coordination of capacitor 169 switching control and LTC transformer control is difficult and leads to excessive LTC transformer switch operations. The present inventive ATC 62 solves the problem by combining the control of capacitors 169 switching with the control of tapswitchs 104 switching (as described in greater detail hereinunder.) Capacitors 169 are switched OPEN by control 62 outputs O, said outputs operating switches 160 by means of electromechanical operators part 161 and latched open by contacts 166. Capacitors 169 are switched CLOSED by control 62 outputs C, said outputs operating switches 160 by means of electromechanical operators part 163 and latched closed by contacts 162.

Capacitor banks at transmission substations generally have more than one section of capacitors 169 which are sequentially switched OPEN and CLOSED by successive operations of control 62 output contacts Open and Close. Often feedback contacts 165 are provided to control 62 which are closed when all capacitor 169 sections are CLOSED. In addition, feedback contacts 164 are provided to control 62 which are closed when all capacitor 169 sections are OPEN. A capacitor section sequencing apparatus 161, as known in the art, is utilized.

The combined control of tapswitch 104 and distribution substation bank capacitors 169 is accomplished by control 62 in the same way as described above for transmission substations. Selectively control 62 also provides the inventive raising and lowering of substation output voltages to influence ACC switching of capacitors 119 located on distribution lines fed by said distribution substation. The joint control of tapswitches 104, substation capacitors 169 and distribution line capacitors 119 by ATC,s 62 is described in greater detail hereinunder.

Fig. 3 shows a power distribution substation circuit providing ATC 62 of regulators 150. Note that one regulator 150 is shown in detail regulating voltage Ein to phase 1 of distribution powerlines with two additional regulators 150 shown in abbreviated form regulating voltages on phases 2 and 3 of the distribution powerlines. Regulator 150 has an input voltage Ein, typically 7800 VAC phase to ground, with the output regulated upwards and downwards by single phase tapswitch 104. Regulators are generally used in sets of three, one per phase, and each with separate ATC's 62, as shown in Fig. 3. These may be applied to the output of a distribution substation feeding each of several three phase distribution feeders or may be placed midway on long feeders to reregulate the three phase voltages beyond that point. Tapswitches 104 are driven by motors M having drive mechanisms 105 with counter contacts 108; counter contacts 108 closing briefly when each tapchange is mechanically committed. Motors M drive mechanisms further have contacts 142 closed only on a neutral tap position where the voltage Ein is equal to the phase voltage leaving the regulator. Motors M are powered by single phase transformers 103 having primaries 116 receiving voltages from phase to neutral 143 of the voltage controlled output of regulators 150 together with secondary 117 supplying motor M voltages, generally at 120 Vac. Motors M may have windings 114 which, when powered, cause motors M to run in the direction of increasing tap positions and having windings 115 which, when powered, cause motors M to run in the direction of decreasing tap position. In any instance, motor direction is obtained by use of one or the other of two contact closures, R and L. Transformers 106 provides 120 Vac from secondary windings 141 to said LTC control 62 in response to primary 140 connections between phase 1 and neutral 143. Said ATC's 62 provide output raise (R) contact means and lower (L) contact means which correspondingly operate motors M. Transformers 106 are often included in regulators 150.

Fig. 3 further shows a typical pole-top capacitor installation of ACC's together with phases 1, 2, 3 and neutral conductors of power distribution lines fed from said power distribution substations. Neutral conductors are shown connected to said substation ground circuitry. Phases 1, 2 and 3 are shown connected to regulators 150. ACC's 139 as shown receive power from phase 1 through stepdown transformers 138. Note that other capacitor locations, transformers 138 may alternatively be connected to phase 2 or phase 3, however it is general practice to switch all three phase capacitors with a single ACC sensing one of three phases. Power factor correction capacitors 119 are shown connectable through contacts 120 to distribution circuits phases 1, 2 and 3. Said ACC 139 selectively closes circuits from said ACC 139 terminal Hot to Close to operate magnetic devices part one 121 thereby closing contacts 120 and connecting capacitors 119 to said distribution powerlines. Selectively said ACC's 139 close circuits from said ACC 139 terminals Hot to Open to operate magnetic devices part two 122 thereby opening contacts 120 and disconnecting said capacitors 119 from said distribution powerlines.

After devices 121 have performed their closing function, they latch closed with contacts 123 and contacts 124 open, removing power from said devices 121. After devices 122 have performed their opening function, they latch open and contacts 123 open, removing power from said devices 122. ACC's close contacts Close and Open for sufficient time for said latching to occur.

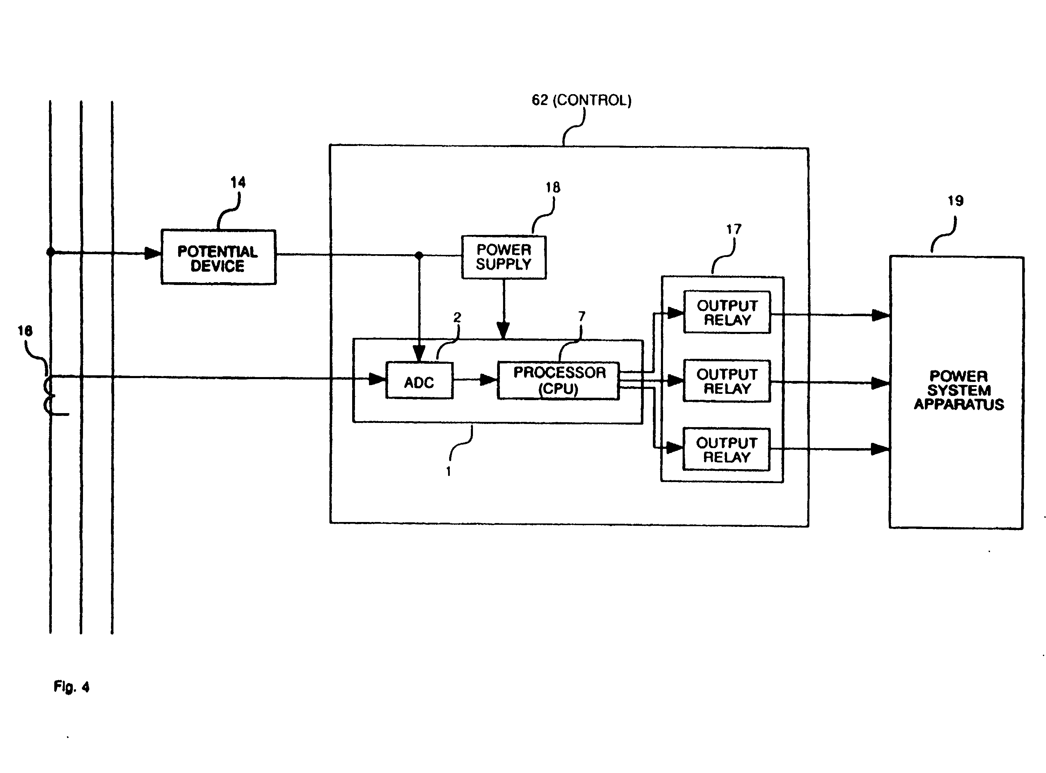

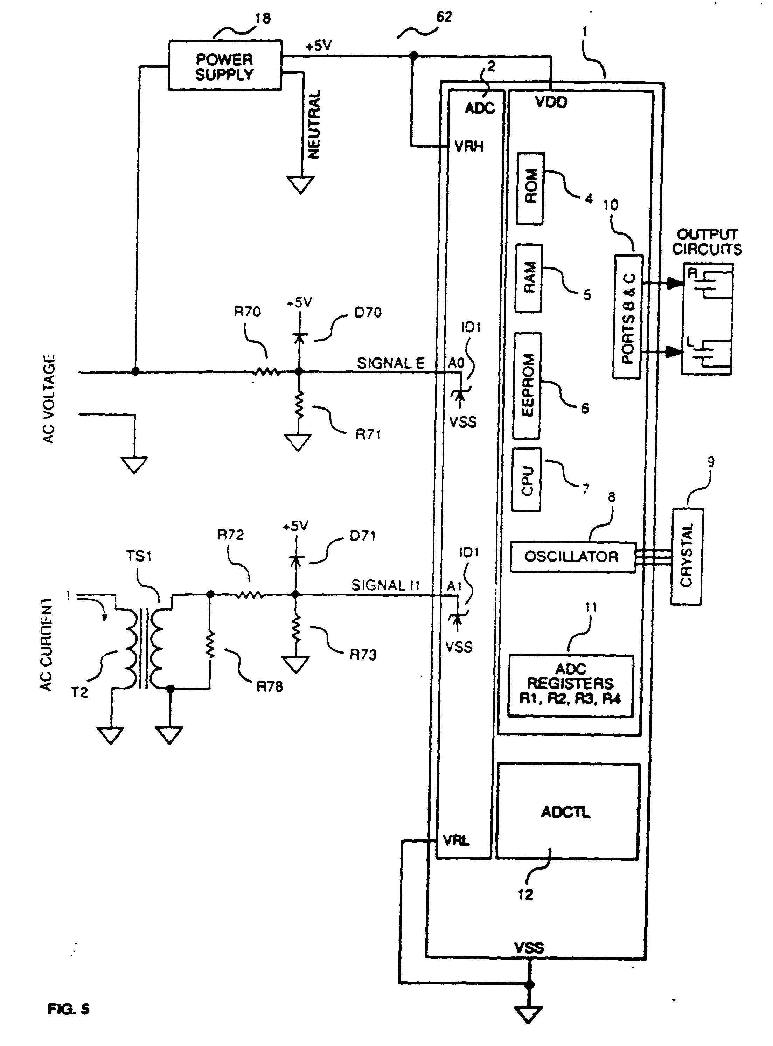

Fig. 4 illustrates ATC means 62 having self-contained microprocessor 1 containing central processor unit (CPU) 7 with on board memories 4, 5, and 6 (see Figs. 5, 6 and 7) also containing an analog to digital converter (ADC) 2. Note that the use of on board memory is for descriptive purposes only; the memories may selectively be separate chips. Power supplies 18 obtain inputs from potential devices 14 and supply power to microprocessor 1. CPU 7 provides outputs to operate relay 17, which is connected to controlled devices. Potential devices 14 also provide input voltages for said ADC's 2 for the purpose of digitizing alternating current (AC) voltage signals from devices 14. Current transformers 16 furnish input current signals to ADC's 2 from one phase of the AC circuits. The current inputs to ADC's 2 are for the purpose of digitizing AC current signals.

All other parts of Fig. 2 are described hereinabove in relation to Fig. 1.

The present invention includes a program used by microprocessor 1 for the multiple functions described herein.

Fig. 5 is a more detailed circuit diagram of ATC's 62 using single chip microprocessors 1 containing ADC's 2; in turn having protective diode ID1, and having said ROM 4 containing programming means, RAM 5 and EEPROM 6 memories; further having CPU's 7 and ports B and C 10 respectively driving raise output contacts R and lower output contact L. External crystal 9 and self contained oscillator 8 provide clock frequencies for said microprocessors 1. Analog to digital control logic (ADCTL) means 12 controls flow of digital samples from ADC's 2 to ADC register means R1, R2, R3, and R4 collectively numbered 11. Said power supplies 18 supply +5V for the VDD supplies as well as the high ADC references VRH of microprocessors 1 and also neutral returns for VSS and low ADC reference of microprocessors 1. The input AC voltages are reduced by resistor means R70 and R71 to signal E connected to inputs A0 of ADC's 2. AC currents I from current transformer 16 (see Fig. 4) flow through transformers T2 having secondaries TS1 feeding current to burden resistors R78. Voltages across R78 are divided by resistors R72 and R73 so as to yield current signals I1 in turn connected to inputs A1 of said ADC's 2. Diode D70 and D71 provide overvoltage protection for ADC inputs A0 and A1. The circuits of Fig. 5 provides half wave digitization of the voltage signals E and current signals I1 in accordance with referenced patent No. 5,315,527. Fig. 5 illustrates use of resistive burden 78 providing a positive half wave signal I1 to ADC input A1. Use of resistive burdens R78 provides signals I1 which are in phase with signals E.

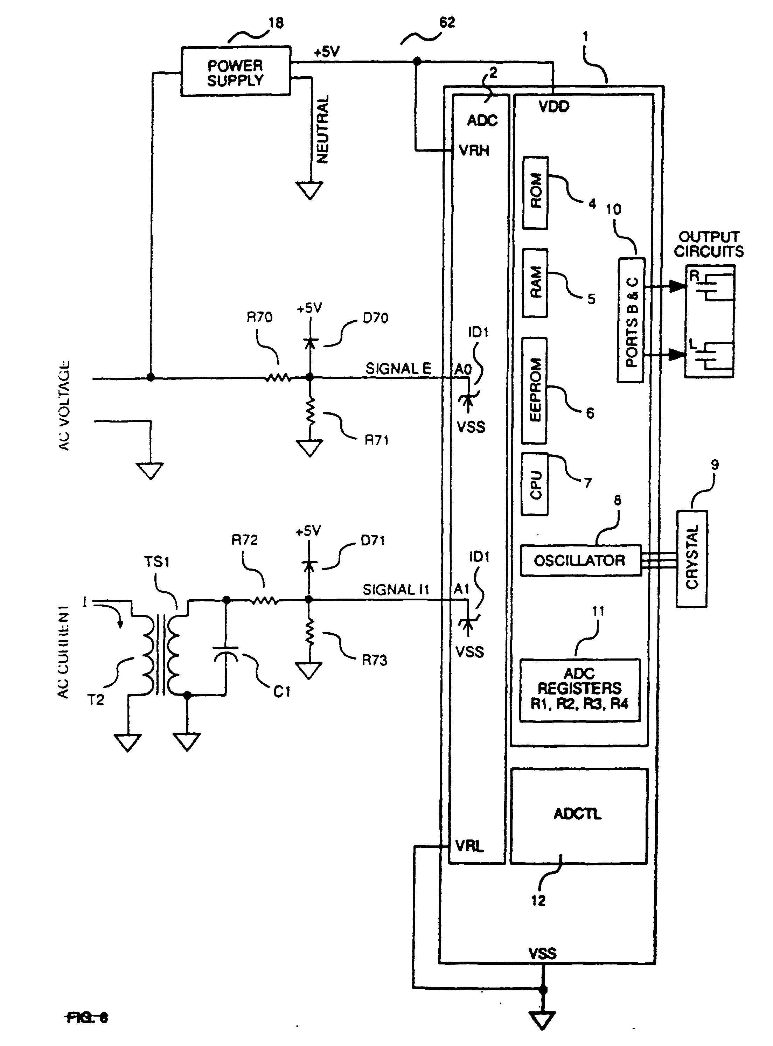

Fig. 6 is identical to Fig. 5 with the exception of the replacement of resistive burdens R78 of Fig. 5 with capacitive burdens C1 of Fig. 6. The voltage across C1 due to current I is 90° leading with respect to signal E. Said voltage is divided by resistors R72 and R73 as in the circuit of Fig. 5 forming signal I1. Use of capacitive burden C1 on current transformer T1 gives 6 decibels per octave attenuation of current signal harmonics so as to more nearly respond to the fundamental component of the current signal when desired. Other components shown in Fig. 6 function as described above in relation to Fig. 5.

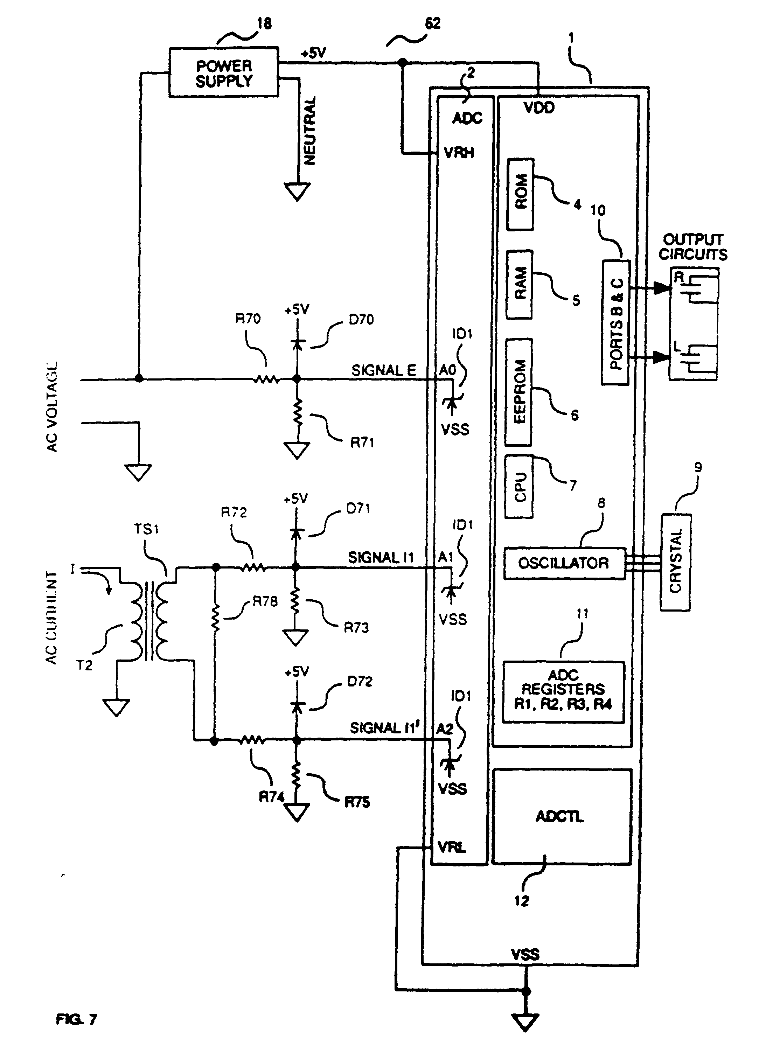

Fig. 7 is also identical to Fig. 5 except that voltages across said winding TS1 are divided by resistors R74 and R75 forming signals I1' in phase opposition to signals I1. Signals I1' are protected from overvoltages by diode D72 and fed to ADC inputs A2 thereby providing for analysis of both polarities of current I.

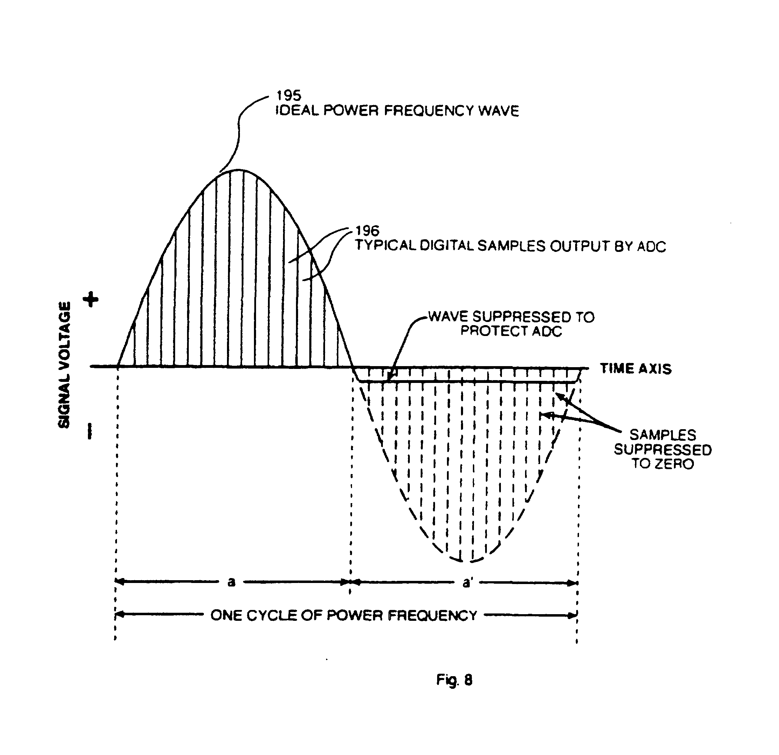

Fig. 8 summarizes the sampling of the positive half cycle, a, of AC current and voltage waves 195 as described in referenced patent 5,315,527. Positive half cycles of wave 195 are sampled by ADC's 2 and samples 196 are output to CPU 7 of said microprocessors 1 (Fig. 5, 6 and 7). Negative half cycles, a', of wave 195 are suppressed by ID1's to protect ADC's 2 and any ADC samples taken during these periods are zero.

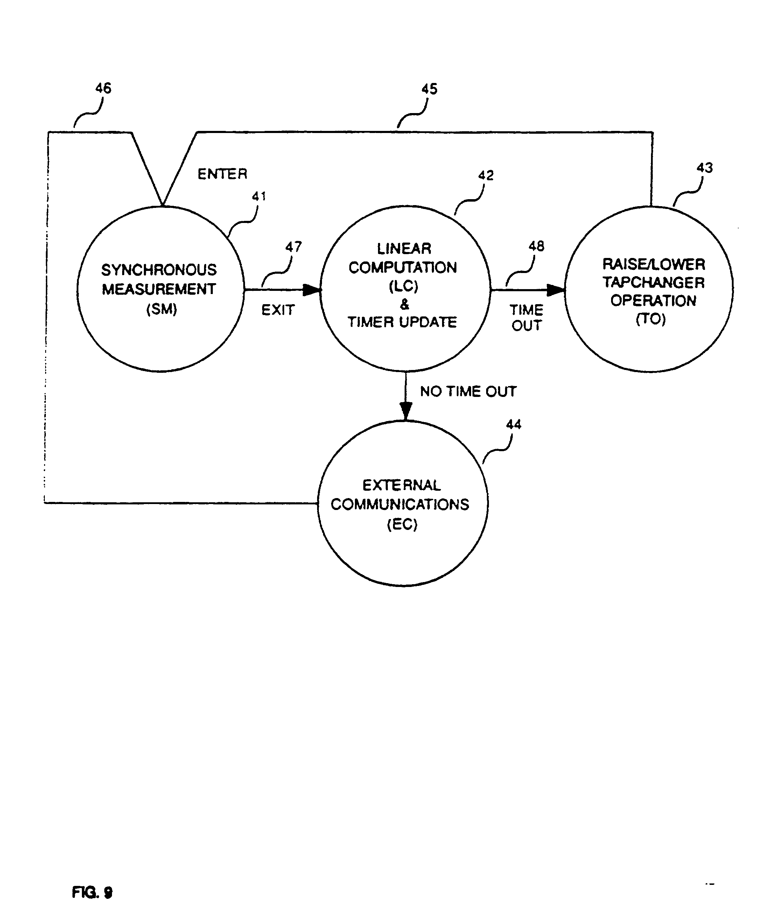

The half wave technology of patent 5,315,527 and the synchronous programming (SLIM) technology of U. S. Patent No. 5,544,064 are utilized in the present invention to obtain the benefits of the improved resolutions of signals E, I1 and I1'; the reductions in components needed; and, the resultant improvements in reliability and the reductions in cost. Fig. 9 summarizes the SLIM technology showing that subprogram 41 takes samples from ADC's 2 (Figs. 5, 6 and 7 herein) in synchronism with a free-running rate of signal conversions by said ADC's 2. When not taking samples, preferably during negative half cycles of input AC signals, the program progresses linearly (one task at a time) via paths 45, 46, 47 and 48, as required for computation by subprogram 42, to communicate via subprogram 44 and to control tapchanging and capacitor switches via subprogram 43.

Use of the SLIM technology is preferred since it makes possible the use of rugged, although relatively slow, microprocessors as used in the automotive industry. The SLIM technology results in programs that are very short so that even at microprocessor clock speeds in the order of two megahertz, 240 samples per half cycle are obtained due to the relatively quick running time of the short programs. The entire program for the inventive ATC's requires from 5000 to 10,000 bits of ROM for storage. The program loops run continuously without interrupts and each loop uses but a portion of the total program at a time.

The various features of this invention utilize the program described herein. Comparable programs using prior art technology may require 10 to 20 times the memory space and run 10 to 20 times slower in terms of clock cycles. It is to be understood other microprocessors and larger programs, are useable to obtain the inventive apparatus and methods described hereinbelow. However, the technologies disclosed in U. S. Patents 5,315,527 and 5,544,046 are preferred and are used hereinbelow in describing the invention.

MEASUREMENT

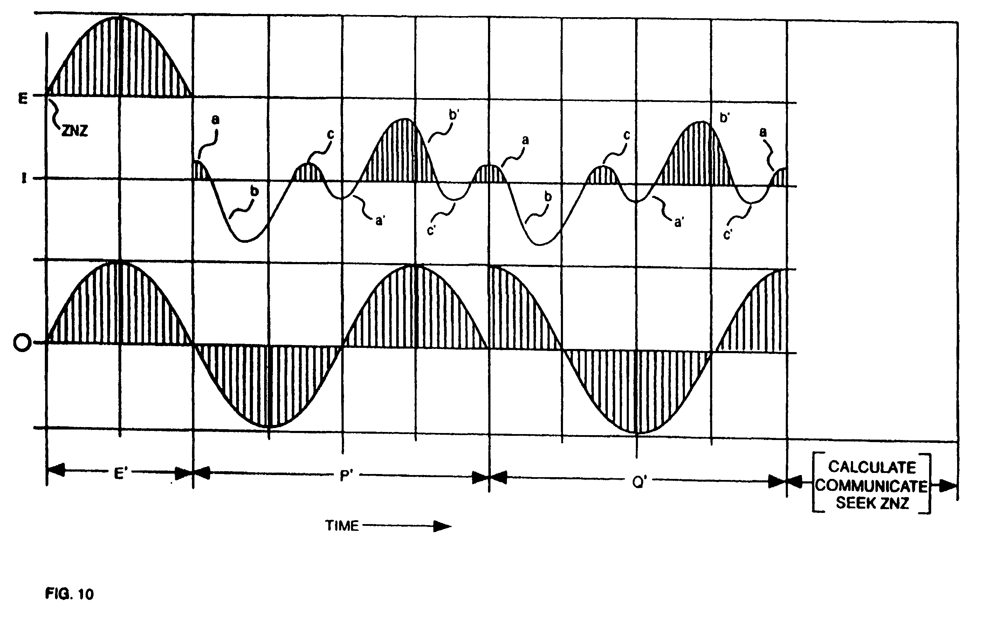

Figs. 10, 11 and 12 show the measurement of the fundamental components of voltage signal E during one half cycle, the measurement of the real (P) component of a current signal I1 during the next full cycle, the measurement of the quadrature (Q) component of the same current signal I1 during a succeeding full cycle with a final half cycle for computation, communications, and resynchronizing with the next zero to non-zero (znz) transition of voltage signals E. The programs runs synchronously with the ADC's from the initial znz detection of voltage signals E to the end of 2½ cycles. The only instruction required from the program to the ADC is to change from signal E to signal I at the end of time period ←E'→. These measurements and the time slot for communications occur at the rate of 20 per second for a 60 Hz power frequency.

The possible values of P range from a positive maximum to a negative maximum. Negative values indicate a reversal of power flow and is useful in reversing the operation of ATC's 62 should there be a reversal of power flow as sometimes occurs when regulators are used at midpoints of distribution lines alternatively fed from either of two points.

The possible values of Q also range from a positive maximum to a negative maximum. At a distribution substation, negative values indicate an excess of capacitive correction of inductive loads.

Computed values of power factor from P and Q obtained using the inventive measurement described herein are found to be an order of magnitude more accurate than obtained by present technology method using 16 samples per cycle.

A second current not shown can be added and alternatively switched in place of current I1. This provides measures of real, P, and reactive, Q, power from the second current. For example, P and Q can be used to obtain the phase relation between the current and voltage E as a reference. P and Q determinations from two currents may be processed to establish the relative phase relation between the two currents as required for the daisy chain paralleling disclosed in referenced U. S. Patent No. 5,530,338.

Note that measurements related to each of two currents are available at the rate of 10 per second by programs alternating between the two currents. The communications time windows, however, are provided after each current measurement and therefore at the rate of 20 per second for a 60 Hz AC frequency. Note that with either one or two currents, extended periods of time can be measured by incrementing a count during each of 20 computation times per second, providing a time measurement resolution of three AC cycles. In applications of the ATC's where only voltage need be measured once per cycle, cycles may be counted giving a timing resolution of one AC cycle.

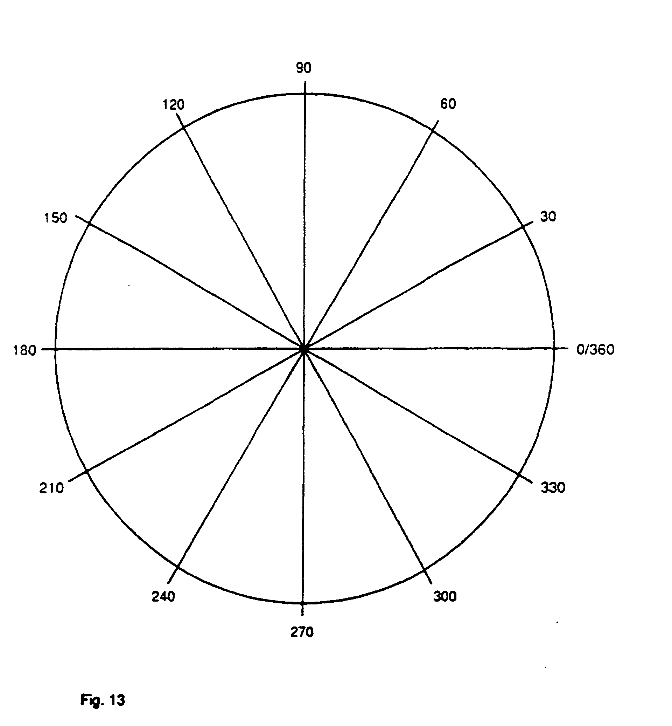

In the following discussion of Figs. 10, 11 and 12, the voltage wave E is shown only in the first half cycle of time where its amplitude is measured. Current waves are shown in the next two full cycles of time where P and Q are measured. Values from the circular table of Fig. 13 are shown along time line marked 'o' by lines following the profile of values as they are used in measuring P and Q as described in greater detail hereinunder.

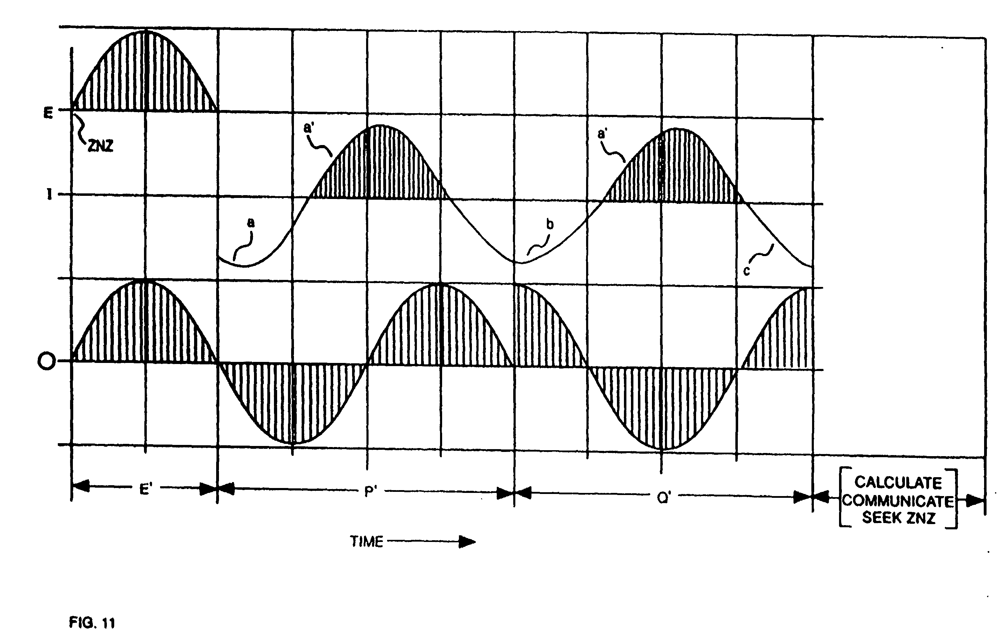

Figs. 10, 11 and 12 illustrate three variations of an inventive method of directly measuring watts and Vars without the conventional necessity of measuring the amplitude of a voltage, the amplitude of a current and the phase angle relation between them and then using trigonometric computations to calculate watts and Vars. Figs. 10, 11 and 12 relate to circuits of Figs. 5, 6, and 7 respectively. By connecting an AC voltage and current to an ADC as shown in Figs. 10 and 11 only the positive half cycle of each signal is sampled by the ADC in accordance with reference U. S. Patent No. 5,315,527. The amplitude of the fundamental component of signal E is measured by first finding the zero: non-zero (znz) transition indication of the start of a positive half cycle of signal E. The measurement is accomplished in one half cycle time (marked ←E'→ on Figs. 10, 11 and 12) recognizing that due to the expected lack of even harmonics of the voltage signal, the negative half cycle is a mirror image of the positive half cycle and therefore contains no additional information to that obtained in measuring the positive half cycle.

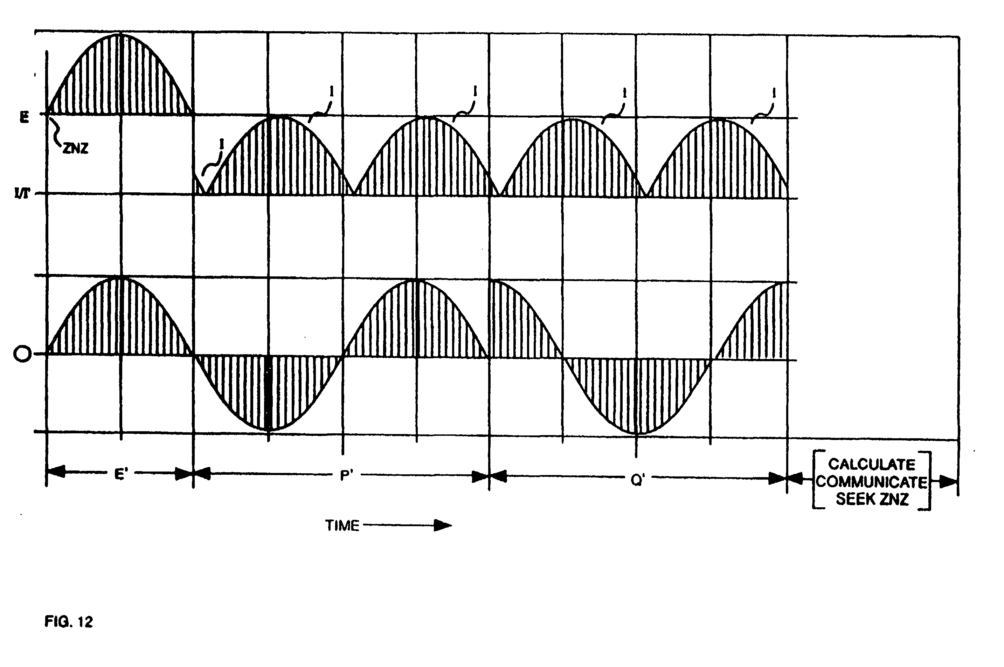

Fig. 12 illustrates inventive method of directly measuring watts and Vars using the circuitry shown in Fig. 7 with the variation of producing signal I1 in phase with current I and signal I1' 180° out of phase with current I. By connecting an AC voltage and these current signals to an ADC as shown in Fig. 7, the full wave of the current is sampled as shown in Fig. 12. Use of resistive burdens R78 provide measurements responding to current signals including all harmonic components when required.

By switching from one half cycle to the other (from ADC inputs A1 to A2; see Fig. 7) and using timing obtained by a previous sampling of a voltage E positive half cycle, the entire current wave of both polarities of current is analyzed.

Use is made of the ring of S*N values of the sine function shown in Fig. 13. Using a preferred factor S = 12, the ring is shown divided into twelve 30° sections having N equally spaced values in each section. These are dividing points generally selected as desirable to effect phase shifts of the sine function relative to signal E as a phase reference. Such phase shifts are required to compensate for placement of potential devices for obtaining voltage signals and current transformers used for obtaining current signals. When used on a three phase system such placement may create the need to correct for a fixed phase shift generally falling in 30° increments. An advantage of use of the table with selectable starting and stopping points is that no distortions or errors are caused by the correction of phase angles as often occurs in prior art analog means for such correction.

Note that any starting and stopping points located half way around the circle from each other provide a half wave function; when starting at any 30° point and going completely around the circle provides a full wave function; and when starting at any 30° point and going twice around the circle provides a two cycle function.

By using the methods of referenced U. S. Patent No. 5,544,064, a large number of samples, preferably 240, may be taken during positive portions of signals sampled. This number of samples per half cycle will be used hereinunder in illustrating the principles of this invention. The number of values in the circle corresponds to the expected number of samples of 60 Hz AC signals, that is 480 values for the complete circle corresponding to a full cycle of any signal sampled. Note that the numbers of samples per cycle and matching values of the table for use on a 50 Hz electric power system may differ from the numbers used at 60 Hz.

To properly provide the 30° sections it is necessary that the number of values in the ring be divisible by 12. The case of the example used of matching 240 samples in a half cycle gives N = 40 values per 30° segment.

The ring table with entry and exit points at every 30° is entered into ROM memory 4 of said microprocessor 1 (see Figs. 5, 6 and 7) and values are read in a counter clockwise direction starting at a first selected point and ending at second selected point around the ring as required by any computation. By "starting at any selected 30° point", one means that the first value of the table read is the next one falling counterclockwise around the ring from the selected point. By "ending at any selected 30° point", one means that the last value read is the one just clockwise around the ring from the selected point.

Note that skilled programmers can generate the ring from a smaller table by using known program minimization technology. The inventive concepts are best described herein, however, by assuming existence of a complete ring of values of the sine function.

It is well known that most measured cycles of voltage delivered to users of electric power in the United States will have a distortion of one percent or less. In addition, the voltage output from a controlled device is expected to be essentially at the voltage setpoint value. In light of these observations, values from the ring of sine functions are used in place of actual voltage samples in the inventive process of measuring P and Q.

On the other hand, it is known that current signals may have large amounts of harmonic distortion sometimes causing more than the expected number of zero crossings of the signals. However it is further well known that current signals at the output of power transformers are unlikely to have significant amounts of even harmonic components. In general, therefore, only the positive half wave of current signals are used for non-zero samples in the inventive measurement of P and Q. (An inventive process for using both half waves of current signals is given for exceptional cases where both even and odd harmonics are expected in current waves.)

It is further recognized that the accuracies required in measuring Vars for controlling the switching of power factor correcting capacitors is not great since capacitors are either connected or not connected. This further justifies use of inventive measurement and computation techniques that may have small theoretical errors.

It is necessary to measure the fundamental components of voltages accurately, however, since voltages are used as the means of direct communications between ATC's and ACC's. In both ATC's and ACC's the fundamental component of voltage signals are used as being unaffected by harmonics and the changing distribution of harmonic components of voltages as capacitors are switched.

During periods ←E'→ of Figs. 10, 11 and 12, the znz transition of signal E is first detected. Thereafter products of 240 samples of signal E and 240 values from said ring starting at 0/360° and ending at 180° are summed forming a value proportional to the fundamental component of signal E.

The computation of E is stopped after 240 multiplications whether or not a non-zero to zero (nzz) transition occurs in the voltage wave E. The measurement is next switched from measuring the fundamental component of voltage to measuring the power (P) component of controlled unit output.

In Fig. 5, transformer T2 has a resistive burden R78 and it therefore is assumed that the real (P) component of current is in phase with voltage signal E. Also since it is known that voltage signal E is being regulated by said control 62 to rather close tolerances, an approximation of the real (P) and quadrature (Q) components of power are made by inventively using the Fig. 13 ring of sine functions in lieu of actual samples of voltage signal E.

Therefore during time period ←P'→ samples of signal I are multiplied by 480 values from said ring starting at 180° and ending at 180° and summed forming a value approximating the P component of output from said controlled device.

Immediately after obtaining the approximate value of P and during time period ←Q'→ samples of signal I are multiplied by 480 values from said ring starting at 90° and ending at 270° and summed forming a value approximating the Q component of output from said controlled device.

For greater accuracy, during the ←CALCULATE→ period, the values of P and Q may be corrected for the amount the previous measure of the fundamental component of signal E departed from its' expected value. This is done by multiplying the measured values of P and Q by the ratio of the previous measurement of the voltage amplitude by the voltage control setpoint.

In Fig. 10 the current signals I are assumed to be severely distorted and having extraneous zero crossings. Note that during the forming of sums for P and Q that approximately one half of the products are zero. This represents the portions of the save of signal I where due to the assumed symmetry of signal I having only odd harmonic components, no information as to the value of P and Q is lost. For example, portion b giving only zero increments to the value of P and Q is the mirror image of portion b' where true increments are obtained. Likewise portions c mirror c' and portions a mirror a'.

Fig 11 is similar to Fig. 10 except that a capacitor is used as the burden for current transformer T2. The starting point on the ring is displaced by 90° to compensate for the phase displacement when using a capacitive burden C1 as shown in Fig. 6. The starting points for computations of Q are always offset by 90° from the starting points selected for computations of P.

The measurements of E, P and Q are performed the same as described under Fig. 10 above. Note that in this example, however, that the current wave I is essentially a sine wave due to the 6 decibels per octave attenuation in harmonics provided by the use of capacitive burden C1.

Fig. 12 shows the measurement of full waves of current wave I/I' as provided by the circuit of Fig. 7. The program alternates between ADC inputs A1 and A2 upon detection of a zero sample in either input. Due to the use of resistor burdens R78, it is assumed that the real (P) component of current is in phase with voltage signal E. During time period ←P'→ samples of signal I/I' are multiplied by 480 values from said ring starting at 180° and ending at 180° and summed forming a value approximating the P component of output from said controlled device. As shown in Fig. 12, the values of the ring are shifted 90° by starting at 90° and ending at 90° for use in measuring Q.

COMPUTATION

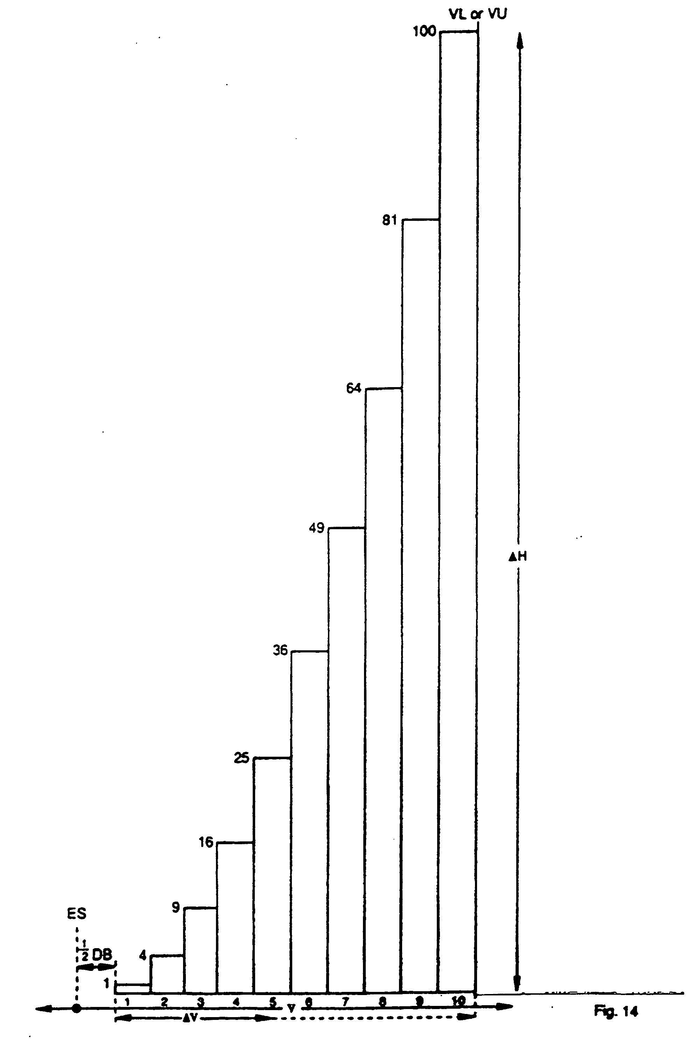

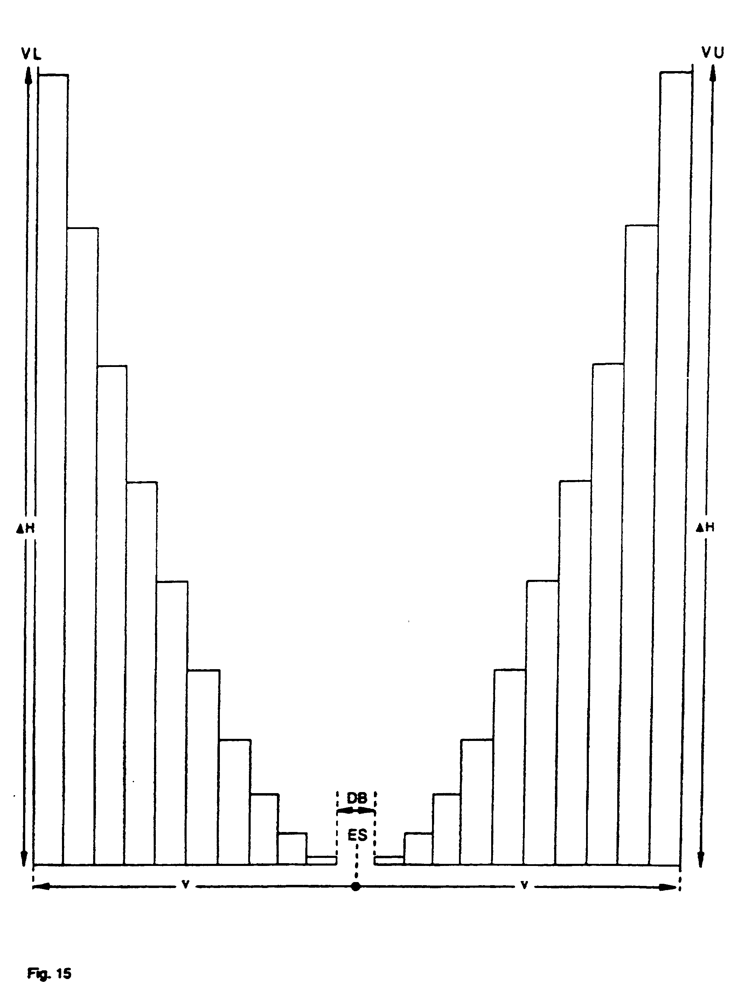

As described in referenced U. S. Patent No. 5,541,498, Fig. 14 shows the assignment of integer values from 1 to 10 starting with 1 at the upper edge of a bandwidth DB and ending at an upper voltage limit VU. Fig. 14 also shows the assignment of integer values from 1 to 10 starting with 1 at the lower edge of said bandwidth and ending at a lower voltage limit VL. The vertical scale shows the squares of these integers which are used to increment a timing variable H upward by an amount ▲H following each measurement v of voltage signal E (see Fig. 15) whenever v is between the absolute low voltage limit VL and the bottom of deadband B (see Fig. 15) and when a raise in tap position may be required should timing variable H accumulate to greater than H', an adaptive time-out limit as described hereinunder. Fig. 14 also shows the use of squares of integers to increment timing variable H upward by an amount ▲H following each measurement of voltage signal v whenever v is between the upper voltage limit VU and the top of deadband B, when a lower of tap position may be required should timing variable H accumulate to greater than H'. Note that the voltage ranges between the edges of band B and the limits VL and VH need not be equal. These ranges are referred to herein as "nonlinear ranges".

Fig. 14 shows voltages between deadband B and either VU or VL. As is necessary in any digital process, this voltage range, which is fundamentally analog in nature, is divided into discrete increments. For clarity Fig. 14 shows the voltage ranges divided into 10 increments with 10 corresponding values of ▲H. This number of increments of ▲H is arbitrary, however, and generally will be much larger than 10, say 100, and is given by the term 'm' in the equation:

$$\blacktriangle H = m * X/Y$$

where:

X = v - (V - ½B) and denominator Y = VU - (V + ½B) when the voltage is above the dead band, and
X = (V - ½B) - v and denominator Y = (V - ½B) - VL when the voltage is below the dead band,

where V is the voltage at the center of band B and v is any measured voltage.

In order to reduce the size of a microprocessor program using these equations, it is desirable to avoid floating point mathematics and use only integral numbers. Note that X/Y will range from 0 to 1 in value. Since integer numbers are rounded down to the next lower integer, the integer value of X/Y will be zero except at the limit value where X/Y = 1. For this reason the product m * X is computed first. An examination of the function m * X/Y so calculated shows that either m or Y will determine the number of integer values obtained for ▲H, depending on which is the smaller, m or Y.

Now X and Y are obtained from values of voltage from a measurement process. The measurement described herein and in referenced patents and patent applications provides a typical resolution for Y of 2700 discrete integer values. With a choice of m = 100, m will therefore determine the resolution of the graph of Fig. 14 into 100 bars for most positions of v between VL and VU. only where v is very close to either VL or VU will the number of bars be determined by a value of Y which is smaller than m.

Thus an integer, preferably starting with 1, is assigned to each increment, progressing from the bandedges to VL or VU. Whenever the voltage, v, is measured within a nonlinear range. Timing variable H is incremented upward by the square, ▲H, of the integer number of the increment.

This invention is not limited to the use of the square relation between ▲H and the increment number. A second choice is the cube or another power, not necessarily an integral power. A third choice is to double ▲H in each progression upward in the number of the increment. A fourth choice is to have a table of values of ▲H chosen with no particular mathematical relation to the number of the increment. The invention is not limited to these choices.

Whenever the measured voltage, v, is within the dead band DB, timing variable H is decremented by a selected amount per calculation period.

The inventive process improves its speed of response to voltage deviations non-linearly as the deviations approach operating limits. In contrast to the invention, prior art controls generally have a fixed time response to voltages outside of a dead band.

In other embodiments of the inventive ATC 62, AC current inputs to the ATC are required along with related measurements of the currents and a voltage.

As illustrated by Fig. 15, a timing variable H increments by ▲H after each voltage v measurement computed as the square of the integer assigned to the voltage ▲v deviation from the top of the dead band DB to the upper voltage limit VU or whenever the voltage v measurement is between the bottom of the dead band DB and the lower voltage limit VL. Timing variable H decrements whenever the voltage v measurement is within the dead band DB but timing variable H never decrements below zero. Timing variable H resets to zero whenever the voltage v passes through the dead band DB and after output raise (R) and output lower (L) operations. Whenever time-out occurs by H ≥ H' the ATC 62 issues a raise command (R) if the time out occurs for voltages v below the dead band DB and a lower command (L) if the time out occurs for voltages v above the dead band B.

The inventive ATC 62 is capable of maintaining a given quality of voltage regulation with less switch operations than prior art LTC controls. Conversely, using the same average rate of tapswitch changes, the inventive ATC 62 is capable of better voltage regulation than prior art controls.

The time out limit H' adapts daily to a value producing a desired balance between the rate of tapswitch operations and the voltage regulation quality factor (VRQF). This desired balance is selectively accomplished in one of three ways:

a) a voltage regulation quality factor VRQF is chosen to satisfy user requirements, such as to meet state statutes limiting voltage variation. The VRQF is then input to the ATC and the resultant rate of tapchanges is accepted as an operating requirement.

b) a desired daily number of tapchanges as averaged with a time constant of one week is input to the ATC and the VRQF accepted as adequate.

c) by considering the cost, T$, of tapswitch operations, by considering the cost, R$, of poor quality of voltage regulation and by then minimizing the total cost.

Note that several volts are often allowed between the voltage measured at a ATC location and the lower statute voltage limit (generally 114 VAC) to take into consideration the voltage drop between the electric utility distribution lines and the actual customer loads.

The ATC's digitally increments timers, H, as the square $\blacktriangle$H of deviations $\blacktriangle$v of sensed controlled device output voltage outside of a set bandwidth. The timer, H, is decremented linearly whenever the regulated device output voltage is within said bandwidth. Timing variable H is reset to zero and the control function changed from raise (R) to lower (L) as appropriate whenever said sensed voltage passes entirely through said bandwidth. A tapchange is made when the value of timing variable H reaches or exceeds H'. Limit H' is adaptively set higher or lower, preferably once per day, so as to produce the selected one of the aforementioned balances. With a), equal VRQF, as the choice the ATC has been found to reduce the average rate of tapchanges by a factor of 40% as compared to prior art tapchanger controls. This extends the operating life of the switches thereby decreasing the number of times transformers and regulators must be taken out of service for maintenance.

SYSTEM VAR MANAGEMENT

Using both the controlled voltage and the load current as inputs, the ATC's directly measure the regulated output wattage (P) and Var (Q) components. The ATC's then lower the voltages as necessary when used at a distribution substation to induce ACC's to switch CLOSED to provide a reduction in the lagging Vars out of the controlled device. The ATC's also raise the voltage as necessary to induce ACC's to switch OFF so as to provide an increase in lagging Vars out of the controlled device. The net effect of this action is to automatically maintain the Vars passing through the controlled device within an established Var bandwidth. These inventive means and methods are described in greater detail hereinbelow.

As revealed in above referenced U. S. Patent No. 5,541,498 an LTC transformer voltage is biased upward to influence distribution capacitors to switch OPEN at locations where the voltage is the highest and biased down to influence the capacitors to switch CLOSED at locations where the voltage is the lowest. This desirable effect is obtained without the requirement for external communications through the interaction of ATC's disclosed herein at distribution substations and the use of ACC's disclosed in referenced U. S. Patent No. 5,541,498 on distribution lines supplied by said substation. The following describes the further inventive methods by which ATC's provide said transformer voltage bias and includes the switching by said ATC's of additional capacitor banks located on the low voltage output of LTC transformers at distribution substations. The ATC's also provide coordinated control of tapswitches and capacitor banks at transmission substations. Said substation capacitor banks may consist of several individually switched sections of power factor correcting capacitors.

INFLUENCING LINE CAPACITOR SWITCHING TO CONTROL STATION VARS

Please refer again to Fig. 1 showing a single distribution line capacitor bank having control 139 and an LTC transformer having ATC 62. Fig. 1 is useful in illustrating the use of a voltage bias in said ATC 62 as influenced by the Var flow out of transformer 150 as measured by said ATC 62.

Fig. 16 has a horizontal axis of transformer 100 secondary voltages on which control 62 voltage setpoints are shown. The initial ATC voltage control band center is ES as shown in Fig. 16 and having a band width DB along the horizontal voltage axis. Assume B is fixed at one volt AC. The vertical axis is the capacitive Var flow measured as either going into transformers 100 secondaries 107 (above line Vs) or leaving the transformers 100 primary 101 (above line Vp). The Var flow is a function of the automatic connection and disconnection of capacitors 119 by switches 120 (Fig. 1) as controlled by ACC's 139.

Transformer 100 secondary voltages are used as first Var references VS and transformer 107 primary voltages used as second Var references VP. Var reference V0 is the average of VP and VS is used in determining actions by ATC's to switch capacitors so as to control Var flows through transformers 100.

Voltage ES is the initial ATC's 62 voltage setpoint. This setpoint moves automatically down to voltage ES - 1 and up to voltage ES + 1 to effect switching of distribution capacitors 119 as described in greater detail hereinunder. The dead band around any setpoint voltage position is DB and is assumed to be one volt hereinunder. This must be set higher when using LTC transformers with greater than one volt maximum change per step of the tapswitch.

Deadband area (A) of Fig. 16 is bound by DB in width, and vertically on the bottom by the size of the largest switchable distribution line capacitor 119 in Vars plotted downward from VO. Areas below VO also represents lagging Vars flowing out of transformer 107 secondaries. When the measured Vars leaves area (A) at the bottom (with an adaptive time delay), open capacitors 119 (if any), located at some point on the distribution system having the lowest voltage, switch CLOSED after an adaptive time delay in the ACC controlling such switching, improving the Var flow by the actual Vars produced by said switching. As the voltage along the distribution lines decreases further, more capacitors 119 switch CLOSED. This has the effect of improving the voltage regulation at the capacitor locations and reducing the Var flow through the transformer.

When the distribution circuit load builds up faster than capacitors 119 close, the Var load may extend below line VC. The area below line VC is divided into quanta ▲Z of Vars (convenient to integer math) preferably by approximately 1/8 of the Var bandwidth from VO to VC (equal to the size of the largest distribution line capacitor). A sum Z is formed of ▲$Z^2$. When this sum Z exceeds Z', an adaptive time out limit as explained below, the control 62 automatically changes the voltage setpoint downward by DB herein assumed to be one volt, to ES -1 entering area (B). Z' adapts to a value that produces a desired daily average number of transitions between areas A, B, and C. Generally one expects one transition to area B in the morning and one to area C in the evening. Weather and other conditions may change this from day to day, however. Therefore Z' is varied, say 10% each day, in the direction to bring a weekly average of daily transitions to a desired setpoint. The adaptive daily adjustment is very similar to the adaption of H' to obtain either a desired VRQF or selectively to obtain a desired daily number of tapchange operations.

The sum Z is reset to zero when the measured Vars go above line VC. and also after each change of the voltage setpoint in going between areas A. B and C.

The previously described adaptive features of the voltage control will then operate tapswitches 104 to bring the voltage within area (B). Operation remains in area (B) until the measured Vars move above line VC for an adaptive period. The area above VO is also divided into quanta ▲Z computed as described above. A sum is formed of ▲$Z^2$. When this sum Z exceeds Z', the control 62 automatically changes the voltage setpoint upward by B herein assumed to be one volt, to ES reentering area (A). In a similar way, when the measured Vars go above line VO from area (A) the voltage setpoint increases to ES + 1 entering area (C).

The adaptive features of the ATC's then operate tapswitches 104 (see Figs. 1 and 2) to maintain the voltage within the voltage range of area (C). The higher voltage influences distribution line capacitors controlled with ACC's to switch OFF bringing the Vars measured by said ATC's to fall below VO. Operation remains in area (C) until the measured Vars move below line VC where again the sum of ▲$Z^2$ is formed and compared to Z'. When Z' is exceeded the operation returns to area (A) completing a loop of control action. A curved arrow below area C indicates the transition that occurs as area C expands downward, that is the operation goes from area C to area A. The sum Z is reset zero when the change is made to allow time for the tapchanging operation to seek the voltage ES at the center of band A. An arrow below area A indicates similar move to area B. Arrows above area B show the transition to area A and above area A show the transition to area C. Note that operation does not change above area C or below area B but waits until time of day and other external factors bring the Vars within the control range.

A history of operation in area (B) is kept. Long periods in area (B) during peak load times is an indication that all available capacitors are switched CLOSED and there is a need for additional distribution line capacitors.

COORDINATED CONTROL OF TAPSWITCHES AND SUBSTATION CAPACITORS

Substations using LTC transformers to control output circuit voltage sometimes have power factor control capacitors switchable to the voltage controlled secondary outputs. Present practice is to control the switching of these capacitors with controls independent of the LTC voltage control and the distribution line power factor capacitors. This is generally unsatisfactory because of the interaction of capacitor switching on voltage control. The present invention extends the ATC control of the LTC transformers voltages and interactive control of distribution line capacitors described hereinabove to further include the switching of said substation capacitors.

At transmission stations having secondary capacitor banks on the output of LTC transformers it is desirable to control both the tapswitches to regulate voltage and the switching of capacitors to control the Var flow through said transformers in order to avoid the improper action that can result from the use of separate tapswitch and capacitor controls.

The control operation described in this section is also used at distribution substations having no lines feeding switched line capacitors.

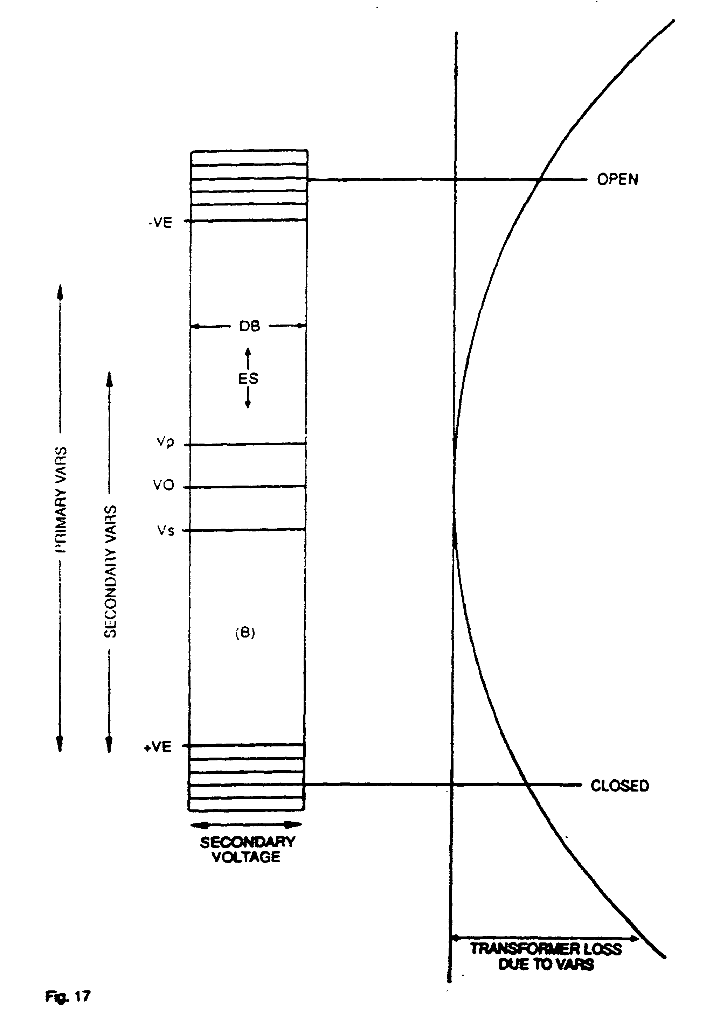

Fig. 17 in relation to Fig. 2 illustrates the inventive method of switching station capacitors 169 ON and OFF using ATC's 62. The Vars flowing through LTC transformers 100 controlled by said ATC'c 62 is measured by said ATC's 62 and forms the vertical scale of Fig. 17. The left hand portion of Fig. 17, marked 'SECONDARY VOLTAGE', shows the Vars as measured by said ATC's 62. The range in Vars from +VE to -VE is equal to the size of one section of said station capacitors and is measured each time the capacitor switches as the changes in Vars from just before the switching to just after the switching.

The portion marked 'TRANSFORMER LOSS DUE TO VARS' indicates the variation in transformer losses with flow of Vars. Since no Vars flow at point VO, the Var loss at that point is zero. Said capacitors are switched CLOSED and OPEN using ATC 62 outputs C(Close) and O(Open) respectively to sequencer 161 at the points indicated. As the requirement for Vars changes either up or down, the operation points as measured by said ATC's 62 move up and down between the points on Fig. 17 marked CLOSED and OPEN. The choice of said points equally spaced about point VO produces the lowest average transformer 100 loss over a period of time as limited by the size of said capacitor 169 sections. Other capacitor 169 switching points may be required by system operating conditions but are expected to produce greater transformer losses.

As explained hereinabove under the discussion of Fig. 2, capacitors 169 may have several sections as sequentially connected and disconnected by state of the art control 161. The inventive process illustrated by Fig. 17 adds sections of capacitors 169 until all are CLOSED as preferably is indicated by a closed contact 165 input FC to ATC 62. Similarly sections of capacitor 169 are OPENED until all are open as preferably indicated by a closed contact 164 input FO to ATC 62.

The areas above -VE and below +VE are adaptively used to prevent hunting due to smaller changes in measured Vars during a general trend in Var flow requiring capacitor switching. Measured Vars, when within the said areas, are integrated to a value adapted to produce a selected weekly rate of capacitor switching and the integrals reset when the measured Vars pass into the deadbands established between VE and -VE. When the Vars measured by said ATC's move out of said deadband the capacitors are switched CLOSED and OPEN as indicated by Fig. 17.

Said areas above and below said deadband are divided into quanta ▲Z of Vars convenient to integer math preferably equal to 1/8 of said Var deadband. A sum is formed of ▲Z$^2$. When this sum Z exceeds Z', said ATC 62 switches the capacitors CLOSED or OPEN as appropriate. The limit Z' is automatically adjusted daily by said ATC's so as to produce a desired weekly average number of capacitor switch operations.

The ATC tapswitch operation adapts as it does where capacitor switching is not used as described above in relation to Figs. 14 and 15. The non-linear timing brings the voltage change resulting from said capacitor switching quickly back one step towards the setpoint and more slowly back each succeeding step required. In other words, the ATC tapswitch operation responds to the voltage change caused by capacitor switching in the same way as to any other voltage change and adaptively changes the speed of response so as to hold down the tapswitch operations required yet maintain a desired quality of VRQF. Prior art capacitor controls switch on small changes in voltage and therefore are prone to switch incorrectly as a result of the tapchange control operation. The Vars sensed by the ATC for capacitor control are much less effected by the small regulated changes in voltage by the ATC's. Furthermore, the nonlinear timing of the ATC's adapt to eliminating extraneous capacitor switching operations.

COMBINING TAPCHANGER CONTROL, STATION AND LINE CAPACITOR SWITCHING

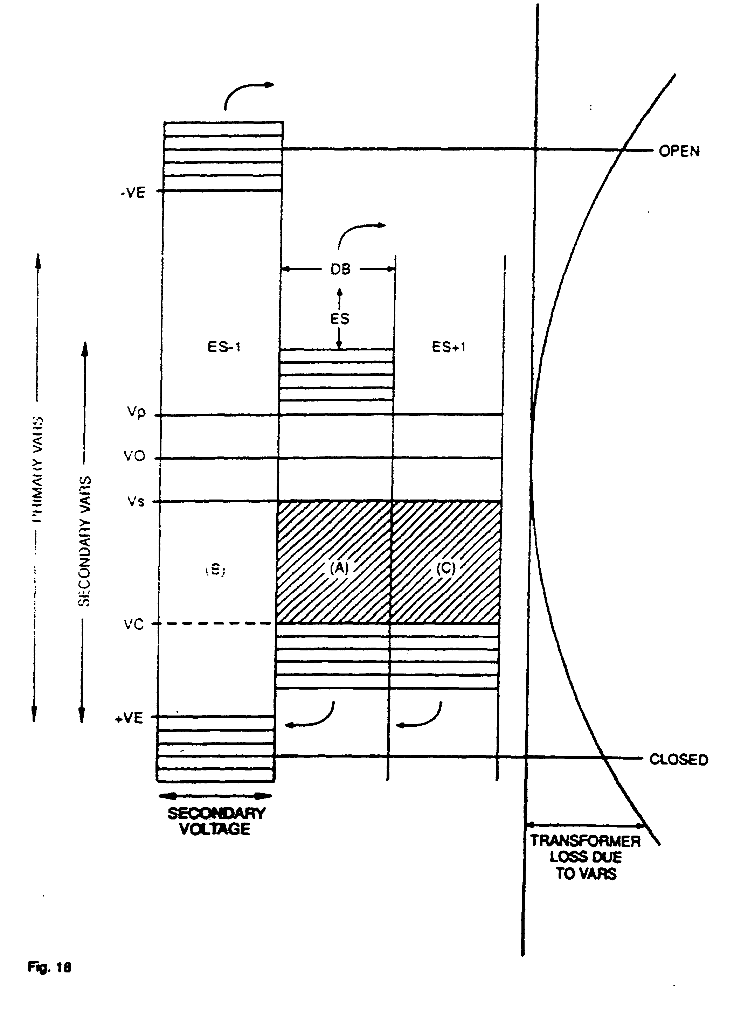

Fig. 18 is similar to Fig. 16 but adds substation capacitors 169 switched by switches 160 as shown in Fig. 2, said switches opened by devices 161 by outputs Open of ATC 62 and closed by devices 163 operated by outputs Close of ATC's 62.

Note that capacitors 160 may be a single section as shown in which case devices 161 and 163 merely open and close switches 160 as directed by output contacts O and C. Alternatively capacitors 160 may have more than one section in which case devices 161 and 163 will have the required logic for switching sections CLOSED and OPEN in sequence. Several types of switches and means for sequencing are in general use. The contact O and C action required to effect the sequencing of section of capacitors CLOSED and OPEN is well known and will not be described in greater detail herein.

Fig. 18 is similar to Fig. 16 but adds the Var limit VE placed below VO by a value set into the control as equal to a multiple M (generally 0.5) of the size of one section of a capacitor bank 169 located at the substation along with transformer 100 and switchable by switches 160 to the transformer 100 secondary.

The portion marked 'TRANSFORMER LOSS DUE TO VARS' indicates the variation in transformer loss with flow of Vars. Since no Vars flow at point VO, the Var loss at that point is zero. Said capacitors are switched CLOSED and OPEN at the points indicated. As the requirement for Vars changes either up or down, the operation points as measured by said ATC's move up and down between the points marked CLOSED and OPEN. The choice of said points equally spaced about point VO produces the lowest average transformer loss over a period of time as limited by the size of said capacitor sections. other capacitor switching points may be required by system operating conditions as obtained using selected values for multiplier M, but are expected to produce greater transformer losses.

The existence of the substation bank implies that there are insufficient distribution line capacitors 119 to compensate for all distribution circuit load generated Vars. Therefore after operation in area (B) no longer holds the Vars above limit VD, it is assumed that all line capacitors 119 have switched on. That being the case, as the Var load grows, area (B) extends downward to limit VE. The substation capacitor is then switched CLOSED and OPEN as described above as described in the section titled

"COORDINATED CONTROL OF TAPSWITCHES AND SUBSTATION CAPACITORS".

It can be assumed that the interaction of the added substation capacitor 160 with the series impedance of transformer 100 will increase the transformer 100 secondary voltage. Therefore it is expected that the inventive adaptive tapswitch operation will soon operate the tap switch 104, if necessary, to return operation to region (B). The resulting Vars are expected to be above VO by about one half the rating of the switched capacitor 160. Note that the previous switching on of all available distribution line capacitors plus capacitor 160 indicates a heavy load condition. It is very unlikely, therefore that any of the Vars fed out of the primary will reach a generator where an unstable condition could result. Operation within area (A) with increasing load can be expected, in time, to fall below limit VD thus switching the setpoint to ES - 1 as before. With further increased load, Vars falling below VE will again produce an outputs of contacts C adding a sections of capacitor 160. This process cycle between areas (A) and (B) until all sections of capacitors 150 are connected if the increase in Var load so requires.

As the load decreases the operating point moves above -VE and after an adaptive time contacts O will operate so as to remove one section of capacitor bank 160 at a time. When all said sections are removed operation is transferred to area (A) by changing the voltage setpoint back to ES.

Note that operation remains in the lower voltage region (B) so long as any sections of substation capacitor 160 are connected. This maximizes the number of distribution line capacitors that remain closed. In fact, the voltage may be lowered even further in response to transformer loading as described hereinabove. This further assures that all distribution line capacitors remain closed to correct power factors and to prevent locations having less than minimal required voltages.

Assume the load decreases towards evening resulting with removal of all of capacitors 150. Operation then continues in area A throughout the night, using area C as required to assure removal of distribution capacitors by operation of ACC's. Note that present practice often uses a single fixed distribution capacitor bank to compensate the inductive exciting current of distribution circuit step down transformers. Use of the inventive methods described herein, permits use of all switched banks permitting the bank having the lowest voltage to stay on at night for exciting current compensation and prevents excessive voltages that can occur at fixed distribution line capacitor locations during light loading conditions. The point where a capacitor can cause excessive voltage may move from time to time as determined by nighttime loads and possible switching changes in the distribution circuit configuration. With all capacitors switched using ACC's, this movement is of no concern.

Note that the above first scheme has the disadvantage that the control of Vars occurs during the daily peak load. An alternate second scheme is to switch the substation capacitors on first and off last. This has the disadvantage of having the coarsest Var control all of the time, even on days when, say only one section of the substation bank is needed.

The preferred scheme described in detail hereinabove has the advantage of leaving the ACC's available during the day to produce the best customer voltage profile and the least distribution power losses.

TYPICAL APPLICATIONS

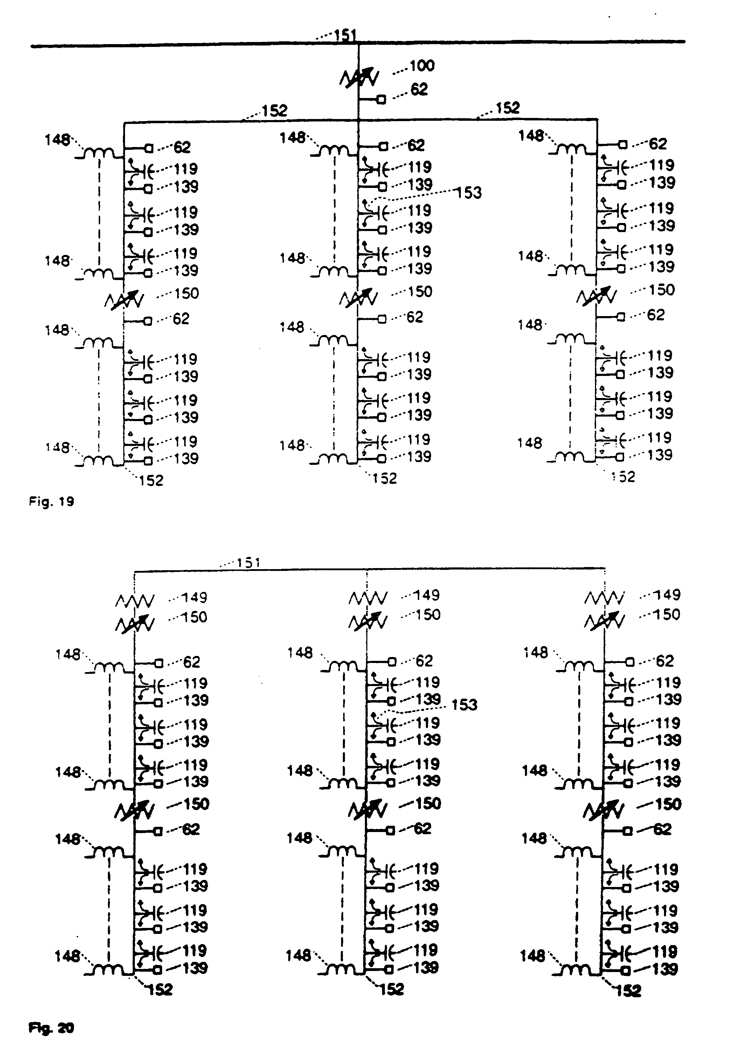

Load tapchanging regulators and transformers may be applied for Var correction in at least the following three ways as illustrated in Figs. 19 and 20.

1) A regulator 150 may feed a regulated voltage, vr, to a distribution line 145 outward from a substation using a Var bias on vr to influence the switching of ACC's 139 on the line 145 so as to minimize the Var flow through the regulator 150. This has the beneficial effect of minimizing the losses on the distribution circuit 5 since corrective Vars from the capacitors 119 to inductive loads 8 need only flow in the distribution line 145 itself. This use of regulators 150 provides lower losses than applications 3) described below.

2) A further regulator 150 may be used midway in a distribution line 145 with a Var bias added to vr so as to influence the switching of ACC's 139 further out on the distribution line 145 so as to minimize the Vars flowing through the regulator 150. This has the beneficial effect of further minimizing the losses on the distribution circuit 145 since corrective Vars from the capacitors 9 to inductive loads 148 need only flow in the further restricted portions of the line 145 either side of the regulator 150, thereby further limiting the distances required for the corrective Var flow.

3) A load tapchanging transformer 100 may supply regulated voltage, vr, to all lines 145 emanating from a distribution substation using Var bias to vr so as to minimize the Var flow through the transformer 100. This minimizes the losses on the distribution line network 145 supplied by the transformer 100 by not permitting further paths for Var currents to flow into the transmission line 144 feeding power to the distribution substation. It does not restrict Var flow to each distribution line 145 and Vars may flow from one line 145 to another as required. This has the advantage of requiring less capacitor 119 locations for the total distribution line network 145 correction but at the cost of somewhat greater losses due to the longer paths sometimes involving more than one radial line 145 from the station.

Figs. 19 and 20 compare the restricted Var flow resulting from use of a load tapchanging transformer at a substation and ACC's along distribution lines fed by the transformer as described in Fig. 1 and the further restricted Var flow resulting from the use of load tapchanging regulators on each phase of a distribution line having ACC's and fed by regulators as shown in Fig. 3.

In Fig. 19 transmission line 151 feeds load tapchanging transformer 100 which then feeds three distribution lines 152. Each distribution line has three midway load tapchanging regulators 150, only one of which is shown. Many inductive loads 148 are shown along the distribution lines. Three capacitor banks 119 are shown on each line 152 between the transformer 100 and regulators 150 and three more capacitor banks between each of three regulators 150 and the ends of the lines. Note that although one regulator 150 is shown midway in each of three lines 5, actually three are used in each location, one on each phase of lines 152. Each of the resulting nine regulators is equipped with an inventive control 62, only one being shown at each of the three regulator locations. Many arrows 153 illustrate flow of inductive Vars from loads 148 into capacitors 119 for correction. Note that while no Var current flows through regulators 150 due to the Var control features of associated controls 62, Var current does flow through the common distribution circuit 152 connecting transformer 100 to the three radial distribution lines.

Note that the capacitors numbered 119 in Fig. 19 are actually banks of three; one for each phase with only one showing due to the nature of the single line representation used. Fig. 17, therefore does not indicate which phase controls are connected to. For circuits fed by a three phase load tapchanging transformer 100 as in Fig. 17, it is preferred that all capacitor controls 139 be connected to the same phase as LTC 62 so that any unbalance in phase voltage will not interfere with the inventive relation of the Var bias from transformer 100 to the voltage sensed by ACC's 139.

Fig. 20 shows, in full three phase form, one of many radial lines at a distribution station fed from transmission lines 151 through fixed ratio step down transformers 149 and regulators 150, inventive controls 62, to each of three phases of the line 152. Line 152 has a midway regulator 150 bank of three regulators, one in each phase and each having an inventive control 62. Var flow lines 153 show load Vars flowing to the nearest capacitor 119 and not through regulators 150 due to the use of Var bias techniques in each control 62 and the resultant response of ACC's 139. Note that no Var flow is permitted (within the discrete nature of the banks 119) from lines 152 and similar lines supplied by transmission lines 151 within the same substation as was possible in the system described by Fig. 19 above. Note that in practice, however, controls 139 on one phase may drive capacitor switches switching all three phases even though control 139 senses only one phase.

For circuits having each phase regulated by an individual load tapchanging regulator as in Fig. 18, however, it is preferable that the controls be rotated between phases in a progression of capacitor locations as further shown in Fig. 20 so that each regulator 150 control 62 will directly effect at least one capacitor bank. If there are less than three capacitor banks, then the Var bias is only used on the regulator controls 62 matching the placement of a capacitor control 139 phase connections.

AUTOMATIC POWER REVERSAL OF LINE REGULATORS.

The possible values of P range from a positive maximum to a negative maximum. Negative values indicate a reversal of power flow and is useful in reversing the operation of ATC's 62 should there be a reversal of power flow as sometimes occurs when regulators are used at midpoints of distribution lines alternatively fed from either of two points.

Reference U. S. Patent N0. (M-2001) describes a control useable with single phase regulators installed at a midpoint on distribution lines as illustrated in Fig. 18. The reference patent describes keeping track of the regulator tap positions and using a mathematical model of the regulator together with measured levels of regulator load currents, computing voltages on what is normally the unregulated input of said regulators. The patent describes a method of determining a reversal of power flow requiring a change in the control action. In the reverse condition it is necessary to reverse the raise and lower tap response to measured voltage. The line drop compensation action is also reversed so that it is functional in the new direction of power flow.

In this invention, the direct measurement of P forms the basis of initiating the required control action upon detection of power reversal. This involves two factors. Since P is measured 20 times per second (for a 60 Hz frequency), the first factor is to average P using a recursive equation of sufficient time constant to reduce any fast jitter of the measured values of P. The second factor is to establish a small deadband either side of P = 0, where the sign of P changes indicating a reversal of power. This inventive use of the direct measure of power flow, P is used in place of the method disclosed in U. S. Patent No. (M-2001).

The inventive determination of P provides an order of magnitude improvement in resolution of power reversal as compared to prior art methods using 16 samples per cycle of AC waves.

Note that the internal impedances of regulators is much smaller than for LTC transformers. For that reason the variables VP, VO and VS as used in determining Var control as described in reference to Fig. 16 may reasonably be assumed equal to each other. The measurement of Vars related to the normal direction of power flow through regulators therefore need not be reversed upon reversal of power flow through said regulators.

Since the ATC does not normally use line drop compensation but preferably uses the inventive changing of the regulated output voltage to influence the operation of ACC's, this operation is reversed so as always to influence ACC's on the power output side of said regulators.

Often it is adequate in practice for a control to block a tapchanger upon change in direction of power flow. This avoids hunting of the control since the control action changes from degenerative to regenerative upon power reversal. This blocking action is easily accomplished in the ATC by a simple sub program responsive to the change in polarity of P.

CONTROL OF WATTS LOAD ON DISTRIBUTION TRANSFORMERS

When a power system becomes overloaded, it has been found that the load can temporarily be lowered by reducing the voltage to the users of electric power. Since many appliances, such as air conditioners, may operate less efficiently at reduced voltage, the benefit of reduced voltage may only last for a few hours; enough to relieve a load peak caused by a weather condition. Once the load peak has passed, it is desirable to bring the voltage back to normal.

Furthermore, when load conditions permit it is desirable to raise the voltage. The increase in voltage may benefit users of electricity in operating appliances whose efficiency increases for a small increase in voltage. The increase in voltage also produces added revenue to the electric utility. A carefully controlled increase held within the ±5% range generally permitted by most state statutes is generally desirable under permissive conditions.

An inventive strategy is to set the ATC operating setpoint at, say 124.5 VAC. At this level the combination of the ATC operation disclosed herein together with the action of ACC's used to switch distribution circuit capacitor banks holds the voltage along the distribution lines just below the upper 5% limit of 126 VAC required by most state statutes. In greater detail, the voltage regulation quality factor, VRQF, is defined herein and can be set into the ATC for a value of error voltage which when added to the setpoint voltage of 124.5 VAC suggested above will not exceed 126 VAC. For much of the year, especially in the spring and the fall when heating and air conditioning loads are low, these voltages can be maintained without exceeding generator or distribution transformer capabilities.

Under conditions of heavier load it is desirable for ATC's to automatically bring down the substation output voltage in small steps at individual distribution transformers to prevent their overload whether or not a total system overload load condition exists which could possibly lead to a voltage collapse power outage. This automation of voltage reduction made possible by the present invention starts taking effect as a load increases in anticipation of a possible system overload. The cumulative effect of individual transformer adaption may correct a system overload condition avoiding or at least delaying use of the present practice of reducing the voltage at all substations as an emergency correction whether or not all individual distribution substation transformers are overloaded.

Individual transformer ATC' 62 sense, say, a load equal to the nameplate rating of a transformer and decrease the setpoint voltage by a selected amount such as one volt. With further overload to, say 110% of rating in spite of the first reduction, the ATC's 62 decreases the voltage an additional amount. Additional reductions to a lower limit, say 115.5 VAC are automatically put into effect as the load increases indicates. Since the number of points of reduction in the inventive ATC' 62 is but a matter of the microprocessor program, no cost is created by the fineness of voltage reduction in response to transformer overload. Prior art controls are limited by overall cost to one, two or three steps of reduction because of the additional hardware required.

The ACC's cooperate by closing capacitor switches when the voltage reduction occurs. This improves the power factor as is generally required during an overload condition. When so switched on, power factor correction capacitors also tend to hold the voltage above the lower 114 VAC limit required by most state statutes at distribution circuit locations far from substations.

As the peak load decreases, generally in the afternoon and evening, the substation voltage is automatically increased until it is back to the original setpoint level.

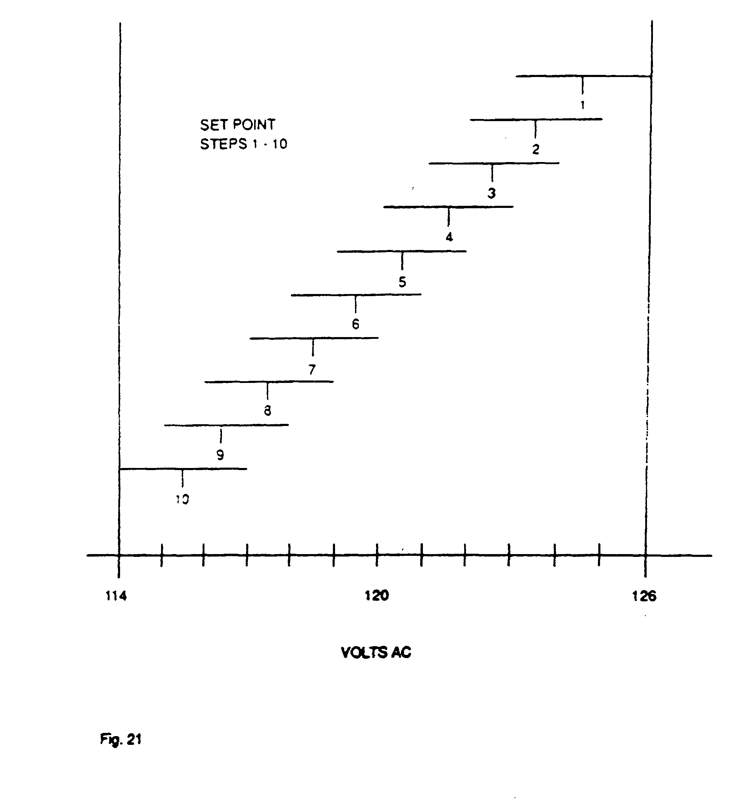

Fig. 21 shows a nominal 120 VAC setpoint with ±5% (±6 volts) range permitted to the electric utilities by most state statutes. Note that in Figs. 16 and 18, operation utilizes a three volt band. Fig. 21 shows 10 such bands with the centers marked 1 through 10 in one volt steps starting with step 1 at 124.5 volts and ending with step 10 at 115.5 volts. The inventive control determines the temperature of the transformer and lowers the operating voltage center point from step 1 down to step 10 as required to reduce transformer over-temperatures. As the transformer goes below a set temperature, the operation moves back to position 1 thus minimizing variations in loading of the electric power system.

With the lack of this automatic system, no reaction to overloading occurs until an emergency lowering of voltage is necessary. This is often too late and power interruptions result.

Preferably the transformer temperature is measured directly and fed into the LTC control as an electrical analog or digital signal. When such measurement is not available, the LTC control measures P. This wattage reading P is integrated using a thermal model of the transformer and the transformer temperature estimated. A measure of ambient temperature is required which is self contained within the control which then is preferably mounted outdoors with the transformer.

ADDING A FACTOR PROPORTIONAL TO THE SQUARE OF LOAD CURRENT

Transformer load current flowing through tapswitch contacts causes deterioration to the contacts generally believed to vary as the square of the current flowing when a tapchange is made. It is desirable, therefore, to make ATC's 62 respond more slowly to voltage deviations when the load currents are high and faster when the load currents are low. It is also desirable to block the tapswitch operation entirely for load currents above some limit $I_{max}$. This preferably is set just above a short term overload rating of the transformer; typically 120% of the "transformer nameplate rating".

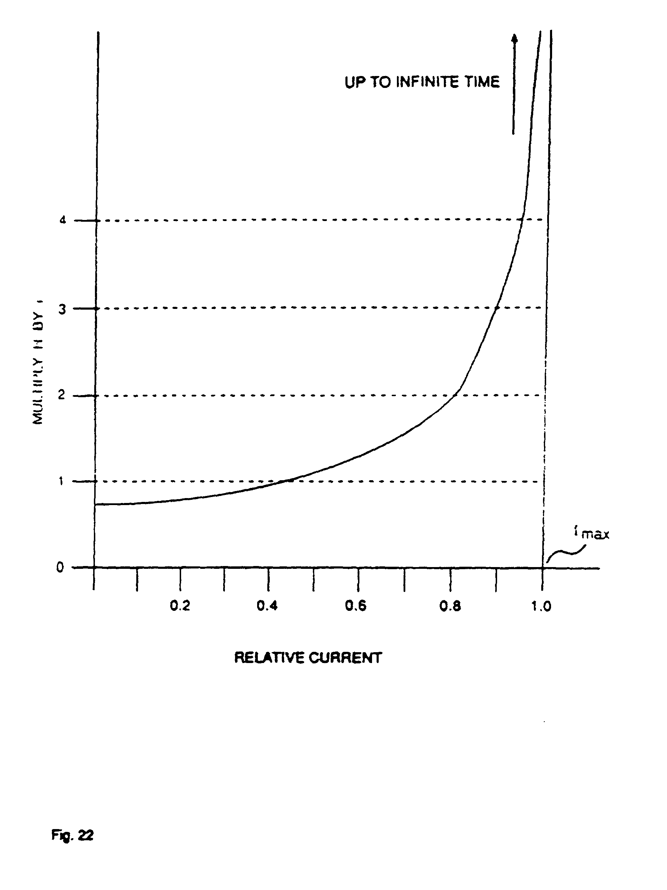

Fig. 22 illustrates an inventive method of accomplishing these current related factors using the following steps:

a) Increment and decrement timing interval H as described in greater detail in relation to Figs. 14 and 15.
b) Before comparing H to H' multiply H by:

$$3) \qquad i = (1 - (I/I_{max})^2))$$

c) If the new value of H is greater than H', then initiate a tapchange.

Fig. 22 shows how the time required to correct a voltage error varies as a function of transformer load current. Note that at load of 50% of $I_{max}$, the factor is one, assuming 50% as a weekly average load about which the limit H' will adapt. At no load, the response time to voltage variations decreases to 75% of the time at 50% load. At a load of 80% of $I_{max}$, the response time to voltage variations increases by a factor of 4. At $I_{max}$ the value of the H multiplier (equation 3 above) becomes zero and currents at this value and above will block the tapswitch operation. Currents over $I_{max}$ indicate a system fault or a serious abnormality at which time the loss of a transformer tapswitch would greatly compound an already difficult condition. Blocking the tapswitch operation is therefore acceptable at overload currents. In contrast to the present invention, prior art systems generally use an overcurrent relay which has no effect until the pickup value of current is exceeded.

Computations are performed just following the measurement cycle. When computations are complete, communications is performed if a request has been received or if the program within ATC 62 calls for a communication outward. Communications is preferably done at high bit rates with a single packet of data.

COMMUNICATIONS

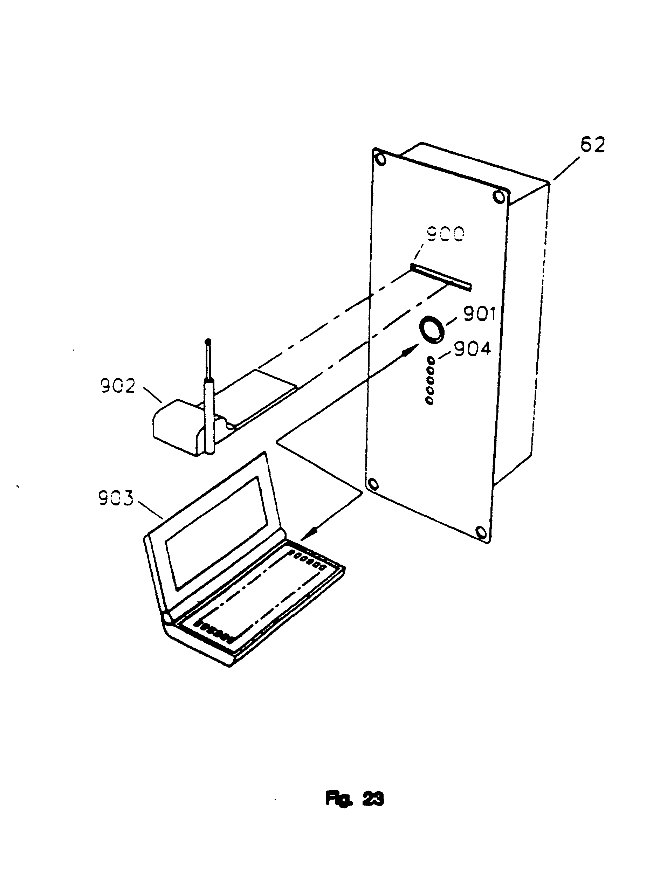

Fig. 23 is an isometric view of the inventive ATC's 62 illustrating the use of palm top and lap top computers 300 as the man-machine interface (MMI). In addition to eliminating all but a few infra-red diodes for indication of ATC operation, these man-machine interfaces selectively uses two way infra-red ports available on palm top and lap top computers. These are matched with two way infra-red port 301 on ATC's 62.

Alternatively communications is provided by way of a plug in wireless modem also illustrated in Fig. 23. This is discussed further hereinbelow in the discussion of the use of Internet.

A third alternative is the use of an adapter responsive to selected SCADA protocols. This alternative is not illustrated or further described herein.

RECORD KEEPING

Use is made of the computing power of external computers using one or more of the alternative communications means to replace ATC programming wherever possible, thereby further reducing the size of the ATC programs.

While the adaptive features of the ATC virtually eliminates the need for communicating to the ATC, the inventive LTC control is capable of generating vast amounts of data, often far beyond the amount capable of human examination and use. The data is most useful, however in analyzing a system disturbance such as a voltage collapse event often resulting in loss of service to parts of an electric power network. An inventive system is described hereinunder in which data may be held in said LTC control until requested.

Data is recorded in memory of said LTC control at many equally spaced intervals RT during a day, the intervals preferably being one to four minutes. Preferably the data includes:

File A. Averages EMA of AC voltage measurements EM calculated over periods equal to intervals RT. Preferably the average EMA is obtained from a recursive equation:

$$4) \qquad EMA' = ((NM - 1) * EMA + EM)/NM$$

where EMA' is the new average voltage after obtaining measurement EM and EMA is the average before obtaining measurement EM, and where NM is the number of measurements in time period RT.
Note that external computers receiving files of EMA data may compute Voltage regulation quality factors VRQF over intervals RT by:

$$5) \qquad VRQF = ((\Sigma(EM - ES)_2)/NM)^{1/2}$$

where ES is the voltage setpoint.
File B. Average measured watts WMA over time period RT preferably using equation 6).

$$6) \qquad WMA' = ((NM - 1) * WMA) + EM)/NM$$

File C. Average measured Vars VMA over time period RT preferably using equation 7).

$$7) \qquad VMA' = ((NM - 1) * VMA) + EM)/NM$$

Preferably this data is recorded in non-volatile memory in blocks of a single day's data. Preferably the day starts and ends at midnight with the day's date entered at the start of each day's block.
Blocks of data are saved for selected numbers of days. The process is described hereinbelow illustrating the use of eight blocks for one week of data.
The blocks are identified for purposes of illustration as follows:

Block 0: today's data from midnight to time of request for the data.
Block 1: yesterdays data.

.
.
.

Block 7: data for a week ago today.

At midnight block 7 is erased and reidentified as block 0 with other blocks moved up by adding one to the old number.
This data is accessed upon demand using the IR port with a computer having an IR port, by use of the wireless modem as described hereinbelow and by use of a SCADA interface device.
A selectively alternate or additional recording is to record fine grain voltage, wattage (P) and Var (Q) quantities with integrating time periods in the order of one second and for periods in the order of, say 15 minutes. This data is particularly useful in substantiating reasons for the previously mentioned voltage collapse failure of electric power service. There is an unsubstantiated theory that such failures may result from the cascading of induction motors stalling due to low voltages. As is well known, fully loaded inductions motors will stop turning at voltages typically 70% of rated voltage. A stalled motor will draw heavy lagging current further contributing to lower voltages along a power distribution line. Thus one motor towards the far end of a line may cause an adjacent motor to stall, and so on. Many motors may remain stalled for several seconds until over-temperature relays remove their power source. The protection is sufficiently slow that a domino effect of motor stalling may overload a distribution line branch until a fuse blows. Wide spread repetition of this effect may theoretically contribute to a voltage collapse interruption of power over a wide range. No data has been reported to the industry, however to either prove or disprove this theory. The inventive recording of the data as described here may provide understanding for the correction of voltage collapses caused by motor stalling.
This fine grain data recording is best done using timing intervals convenient to said microprocessor programs and to the use of said microprocessor memory. Integrating times need not be precisely one second and is varied to best pack said data into blocks of memory as required for the type of said memory chosen. Such data packing also contributes to the communicating of said data in serial digital strings compressed with little or no wasted space.

Preferably the fine grain data is stored in flash or other non volatile memory so as to be available after a power interruption that may follow a particular pattern of variation of voltage and P and Q components of power flow. In addition the length of time before the fine grain data is overwritten is a function of the efficiency in the use of the memory and the amount of memory available. Preferably this data is communicated automatically, using one of the ways described above, following a power interruption of greater than a selected time. This automatic communications prevents useful data from being overwritten as the power returns to normal.

## COMMUNICATING DATA TO THE INTERNET

The data is entered into Internet via a wireless modem where it is then available to computer users at many locations in the effected network desirable of analyzing the system disturbance so as to minimize effects of a reoccurrence of the disturbance.

The digital data is sent from said LTC control using radio signals between said controls and regional radio tower means capable of sending and receiving digital signals over a radius of some 20 miles. From said regional means digital signals are exchanged with a central digital signal dispatching station capable of entering data into Internet as messages accessible to users of Internet.

Devices available for said radio signaling means include a Motorola 100 D device. These plug into PCMCIA slots in said LTC controls 62 using parallel interfaces with said microprocessor 1.

Alternatively Motorola Envoy devices are used for said radio signaling means using a serial interface with said control 62.

Said regional means and said central dispatching station are typically provided by an Ardis Communications Network in turn using a Radiomail interface with the Internet means.

A master user of Internet may request all blocks; any one block; and any file A through D as described hereinabove. This master user determines the communications costs in the selection of data to be transferred. Once transferred, other users of Internet can use the data with more minimal Internet charges.

## ADAPTIVE TAPCHANGER CONTROL TEST SETUP

Adaptive capacitor control (ACC) production equipment that is patterned along the lines of the invention disclosed in U. S. Patent 5,541,498 has been successfully tested on Florida Power Corporation distribution lines.

A test setup was installed which included controls connected to 120 volt outlets at locations served by Florida Power Corporation distribution lines. These controls sensed, and responded to, the voltage variations created by Florida Power customers as they turned room thermostats up and down, as air conditioning equipment responded to daily and seasonal fluctuations in temperature. It was found, for example, that whether or not the sun was shining was a major factor on the voltage and in turn in the operation of the adaptive capacitor controls. The test setup involved the varying of scaling factors and other details of the non-linear adaptive process so as to properly respond to the very complex behavior of many persons living and working in the area served by the distribution lines from which the controls received their power.

Adaptive tapswitch controls were combined with the inventive technology disclosed herein, and the following additional tests were carried out using the utility customer generated voltage variations on a Florida Power Corporation distribution line.

A 120/240 volt service was connected to the test setup from a 25 KVA transformer on a 13 kv circuit service. This service was free from loads other than the test connections to be described. In this way the test setup responded to the fluctuations in the 13 kv distribution voltage virtually independently of the load on the service transformer since the test equipment load was kept very small and nearly non-variant.

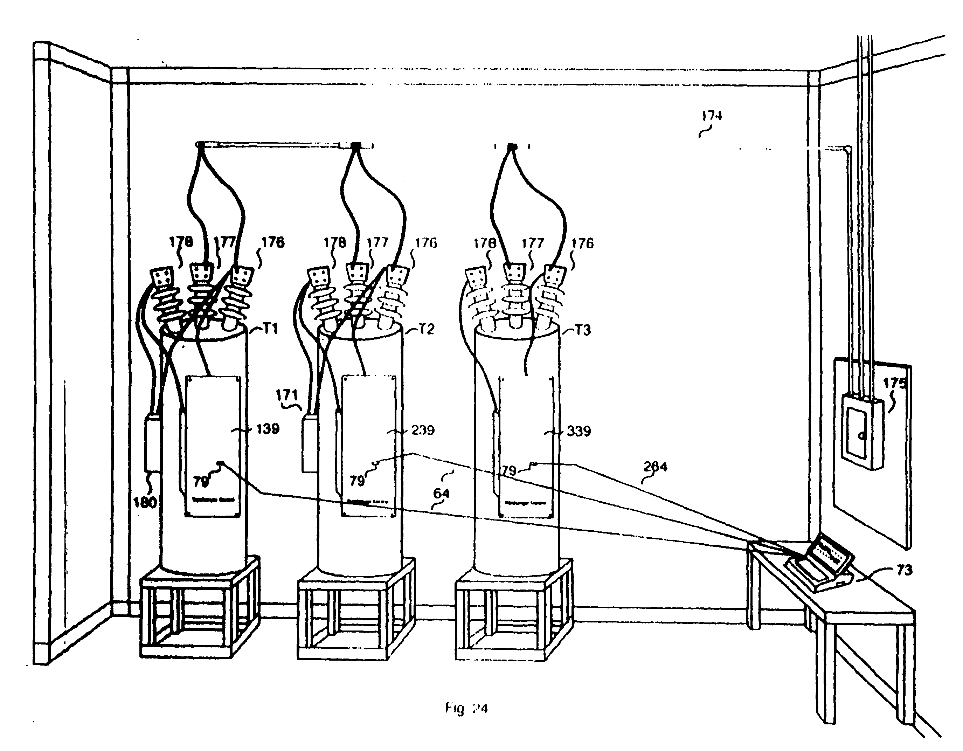

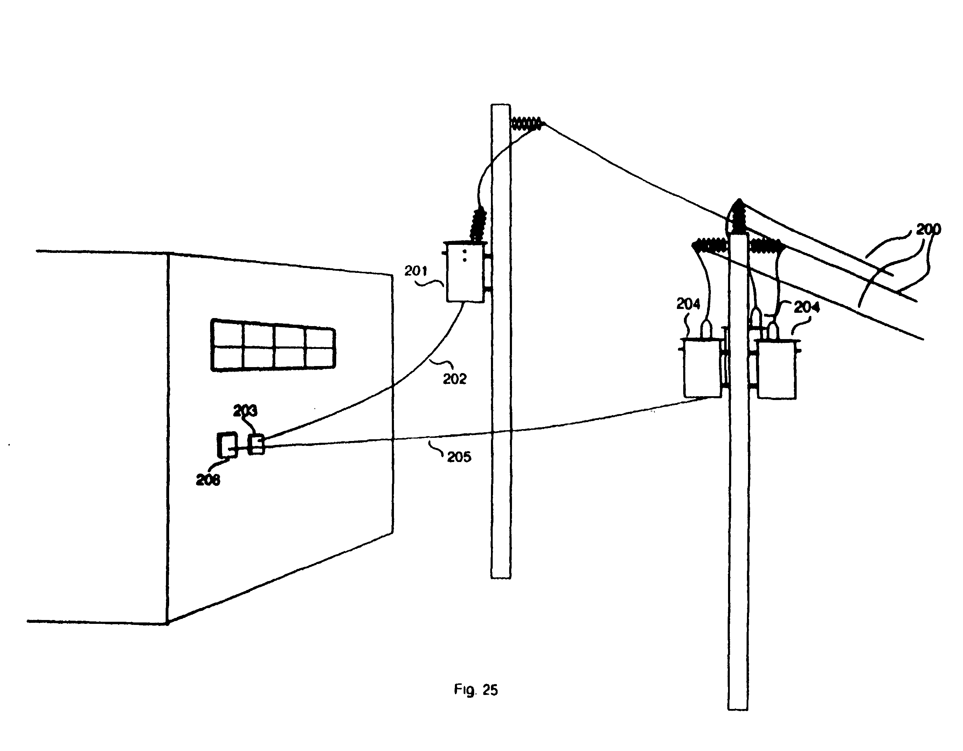

Fig. 25 shows this service and Fig. 24 shows in the test setup to measure the improvement resulting from the inventive adaptive LTC control described herein.

In Fig. 25 transformer 201 steps down the nominal 7,500 VAC of the 13 Kv (phase to phase) distribution line 200. This distribution line feeds 3 phase power to a customer through three transformers 204 via conductors 205 to entrance 206. The single phase 120/240 volt service for the test setup work is carried over conductors 202 from transformer 201 to entrance 203.

Fig. 24 shows entrance box 175 for the single phase service feeding voltage via conduit 174 to regulators T1, T2 and T3. This provides for tests with three single phase regulators.

Terminals 176 of the regulators are the neutral terminals, terminals 177 are the unregulated input terminals. In this setup terminals 177 are supplied with unregulated nominal 120 VAC from the experimental supply shown in Fig.

25. Terminals 178 are the regulated output terminals of the regulators.

Regulator T1 is controlled by tapchanger control 180 which comprises a Beckwith Electric Co. M-0067 control as described in U.S. Patent 3,721,894. Control 180 senses the regulated 120 VAC directly from terminal 178 rather than from a step-down transformer normally used. Control 180 is set at 120 VAC with a two volt bandwidth, 120 second time delay using the standard timer and non-sequential operation. In this way, the timer resets after each tap change, integrates upward when the voltage is out of band and resets when the voltage is in band.

Regulator T2 is controlled by tapchanger control 171; a Beckwith Electric Co. M-2001 control which is described U. S. Patent (S.N. 08/152,001). Control 171 senses the regulated 120 VAC directly from terminal 178 rather than from a step-down transformer normally used. Control 171 is set at 120 VAC with a two volt bandwidth, 120 second time delay using the integrating timer option and non-sequential operation. In this way, the timer resets after each tap change and integrates upward when the voltage is out of band and downward when the voltage is in band.

Regulator T3 is controlled by the inventive ATC 339 as described herein. Additional ATCs 139 and 239 are connected to regulators T1 and T2 to gather data only. All three controls 139, 239 and 339 measure the voltage each half cycle and compute two recursive averages of VRQF; the first having a short term and a second being a recursive average of the first recursive averages having a long term. In addition, a third recursive average of voltage having a short term is computed. Said first and third short term averages are recorded for study of the ATC's behavior.

Equation 5) hereinabove is used in computing said first and third averages VRQF using chosen time constants which are binary numbers providing a time constant of approximately two minutes. Binary numbers are chosen for convenience in dividing by shifting the binary point in the control 139 microprocessor program.

In using equation 5) ▲E is the difference between the measured voltage and the band center voltage, which for all controls in this test is set to 120 VAC. Note that the squaring process produces only positive answers, independent of whether the voltage error is above or below 120 VAC.

The control 62 computes said second recursive average providing a one week time constant referred to as the weekly average available for readout using computer 73 whenever requested. In early stages of the tests, H' was adjusted manually so that ATC 339 gave the same weekly average VRQF as said M-2001 control 171. In later stages of the tests H' is adjusted adaptively to produce a VRQF of 0.4, that being the value obtained in the earlier stages.

The binary number 8192 is proper to use in equation 5) in a control which is measuring only voltage. In such a control, using the SLIM technology disclosed in U. S. Patent No. 5,544,064, every cycle of the AC wave is measured and used in the first equation 1). In a control using both voltage and current in making measurements, computations such as of equation 1) are made every three cycles giving 20 measurements per second; 1,200 per minute and 2400 in two minutes. The binary number, 2048, is then used in place of 8192 in equation 5). Note that in the SLIM technology, the samples of the AC waves is synchronous with the ADC for greatest efficiency of the sampling process, the computation and communications period is accomplished within one half cycle so as to make the packets of measurement, computation and communications synchronous with the AC frequency. The counting of AC cycles then becomes the primary method of measuring times such as the two minutes and one week chosen for said short and long term recursive averages.

Adaptive controls 139, 239 and 339 located on regulators T1, T2 and T3 compute the same recursive averages of the voltage error squared and communicates these to computer 73 where the short term average is available as a time plot and the long term average available as a number. Note that the measurement of VRQF for all three regulators T1, T2 and T3 are obtained using identical ATC 139, 239 and 339 hardware and programs and identical computer 73 processing of data so as to fairly compare the rates of tapchanges of said three regulators.

Controls 139, 239 and 339 have set bandwidths of 1.0 VAC and set voltage limits 6 VAC above and below the band center voltage (herein 120 VAC). When the voltage is above the deadband DB of Fig. 15, "H" times upward nonlinearly and when the voltage is in the deadband DB, "H" times downward at a selected rate. This adjustment of "H" occurs after each synchronous measurement interval until either:

a) "H'" is exceeded in which case the tapswitch is moved down, (T3 only) or
b) the voltage moves below the deadband DB in which case "H" is reset to zero.

When the voltage is below the deadband DB, "H" times upward nonlinearly and when the voltage is in the band, "H" times downward at a selected rate. This adjustment of "H" occurs after each synchronous measurement interval until either:

a) "H'" is exceeded in which case the tapswitch is moved up (T3 only) or
b) the voltage moves above the band in which case "H" is reset to zero.

The non-linear process substantially identical to the one disclosed in U. S. Patent No. 5,541,498. While the present invention discloses the fundamental concepts for making "H'" adapt to a desirable value, the test setup provided data to refine the detailed adaption algorithms for "H'", therefore in earlier stages of the test "H'" was adjusted manually.

The VRQF is obtained using computer 73 and H' changed daily in ATC 339 on regulator T3 until the measures of voltage quality from regulators R1 and R2 is equal to the voltage quality from regulator R3. Note that the voltage quality from regulators R1 and R2 was found to be nearly equal with the settings chosen for them as described above.

Operations of regulator R1 by said M-0067 control and regulator R2 by said M-2001 control were found to produce very nearly the same VRQF. H' was varied in control 339 to match and the daily average number of tapchanges in the three regulators were compared. The rate of operations of regulators T1 and T2 were found to be nearly equal and the rate for regulator T3 was found to be approximately 40% less when a value of H' was found giving the same VRQF in all three regulators.

Fig. 26 shows a 24 hour plot of the regulated voltage produced on July 10, 1996 by a ATC set for a weekly average VRQF of 0.4 volts rms. The time scale is for a 24 hour period starting at midnight.

Fig. 27 shows a 24 hour plot of VRQF's with two minute time constants corresponding to the voltage plot of Fig. 26.

The following table gives additional test results corresponding to the data shown in Figs. 26 and 27. The weekly average of tapchanges per day is for the week preceding July 10, 1996. Note that H' of the ATC was adjusted manually to bring the weekly average VRQF of the M-2001 and the ATC together. The M-0067 was adjusted for the same bandwidth and timeout setting as the M-2001 with no further effort to balance the VRQF produced by the M-0067.

| CONTROL | WEEKLY AVERAGE VRQF | NUMBER OF TAPCHANGES DAY OF FIGS. 26&27 | WEEKLY AVE TAPCHANGES PER DAY |
|---|---|---|---|
| M-0067 | 0.512 | 27 | 23.0 |
| M-2001 | 0.413 | 26 | 21.7 |
| ATC | 0.408 | 14 | 14.8 |

ADVANTAGES OF THE INVENTION

1. Reduced number of tapchanges required to obtain a desired quality of voltage control.
2. Improved voltage control resolution.
3. Measuring and minimizing Var flow by voltage bias influence on distribution line ACC switching.
4. Coordinated control of substation capacitor banks and LTC transformer tapswitches.
5. Adaptive algorithms are superior to, cannot be duplicated by human control and eliminate most human control.
6. Provision of selected periods of high resolution data on daily voltage control with any days data callable on demand such as into Internet for wide distribution.
7. Fine grain voltage data collected and following a power interruption held for recall within a selected time for analysis such as following a wide area voltage collapse blackout.
8. Correlating fine grain data.with library of voltage templates to determine need to trip load shedding circuit breakers.

**Claims**

**1.** A system consisting of transformers (100) and regulators (150) supplying power to distribution lines, said transformers (100) and regulators (150) having output voltage changing tapswitches (104), said tapswitches (104) having adaptive control devices (62) operating around a voltage band center setpoint comprising in combination:

output means (17) for lowering tapswitches (104) when a first timing means times out for voltages above said band, and
output means (17) for raising tapswitches (104) when said first timing means (7) times out for voltages below said band,

**characterised by** said first timing means (7) integrating non linear functions of voltage excursions above and below said voltage band so as to time out when said integration exceeds an adaptive timing limit,
measuring means (7) for determining a voltage regulation quality factor (VRQF) for said control devices (62),
means for entering a desired VRQF, and
means for changing said timing limit of said first timing means so as to obtain said desired VRQF as averaged over times greater than said time limits of said first timing means whereby voltages regulated to a desired VRQF are supplied to power distribution lines.

2.  A system as in Claim 1 further comprising in combination:

   power factor correction capacitor means (19) connected through switching devices (120) to said distribution lines at selected points along said lines, and
   control means (139) for said switching devices (120) adaptively responsive to non-linear excursions of power voltages on said distribution lines from time averages greater than one week of said voltages
   whereby voltages regulated to a desired quality are maintained along the distribution lines.

3.  A system as in Claim 1 or 2, further comprising in combination:

   means for measuring lagging vars (16,141) flowing into said transformers (100) and regulators (150) from said distribution lines,
   means (62) for lowering said voltage band center setpoint so as to induce the switching ON of said switching devices by said control means when required to reduce said lagging vars, and
   means (62) for raising said voltage band center setpoint so as to induce the switching OFF of said switching devices by said control means when required to increase said lagging vars
   thereby controlling the var flow through the transformers and regulators.

4.  A system as in Claim or 2 or 3, wherein said voltage regulation quality factor is the average of the square root of the sum of the squares of the voltage deviations above and below said voltage band center setpoint.

5.  A system as in any one of Claims 1 to 4 further comprising in combination:

   means (62) for determining the rate of tapswitch operations as averaged over a time of at least one week,
   means (62) for entering a desired rate of tapswitch operations, and
   means (62) for changing said adaptive time limit of said first timing means so as to produce said desired average rate of tapswitch operations as an alternative mode of operation to that of maintaining a desired voltage regulation quality factor.

6.  A system as in Claim 3 further comprising in combination:

   means (62) for entering a var band into said adaptive control devices for tapswitches ,
   means (62) for entering a first var band center setpoint,
   a second timing means (62) responsive to a non linear function of var excursions outside of said var band,
   means (62) for lowering the voltage band center setpoint from said first selected value to a second selected value when said lagging vars exceeds the var band,
   said adaptive control devices (62) for tapswitches automatically lowering the transformer and regulator voltages into said second voltage band,
   said switch controls (139) automatically switching capacitors on so as to reduce the lagging vars flowing into the transformers and regulators,
   means (62) for returning the voltage setpoint to said first selected value when the vars return to within the var band,
   means (62) for raising the voltage setpoint from said first selected value to a third selected value when said lagging vars are less than the var band,
   said adaptive tapswitch devices (62) automatically raising the transformer and regulator voltages into said third voltage band,
   said switch controls (139) automatically switching capacitors off so as to increase the lagging vars flowing into the transformers and regulators,
   means (62) for returning the voltage setpoint to said first selected value when the vars return to within the var band,
   means (62) for determining the rate of switching voltage bands,
   means (62) of entering a desired rate of switching voltage setpoints,
   second timing means (62) integrating non linear functions of var excursions above and below said var band so as to time out above a timing limit, and
   means (62) for changing said integrating time limit of said second timer so as to produce said desired rate of switching voltage setpoints
whereby vars as well as the voltage regulation quality factor are controlled.

**7.** A system as in Claim 3 further comprising in combination:

means for entering a var band into said adaptive control devices for tapswitches ,
means for entering a first var band center setpoint,
a second timing means (62) responsive to a non linear function of var excursions outside of said var band,
means (62) for lowering the voltage band center setpoint from said first selected value to a second selected value when said lagging vars exceeds the var band,
said adaptive control devices (62) for tapswitches automatically lowering the transformer and regulator voltages into said second voltage band,
said switch controls (139) automatically switching capacitors (119) on so as to reduce the lagging vars flowing into the transformers and regulators,
means (62) for returning the voltage setpoint to said first selected value when the vars return to within the var band,
means (62) for raising the voltage setpoint from said first selected value to a third selected value when said lagging vars are less than the var band,
said adaptive tapswitch devices (62) automatically raising the transformer and regulator voltages into said third voltage band,
said switch controls (139) automatically switching capacitors (119) off so as to increase the lagging vars flowing into the transformers and regulators,
means (62) for returning the voltage setpoint to said first selected value when the vars return to within the var band,
means (62) for determining the rate of switching voltage bands,
means (62) of entering a desired rate of switching voltage setpoints, and
second timing means (62) integrating non linear functions of var excursions above and below said var band so as to time out above a timing limit
whereby vars as well as the rate of making tapchanges are controlled.

**8.** A system as in Claim 3 further comprising in combination,
said adaptive control devices (62) for tapswitches having means for operating in response to measurements of the fundamental frequency component of voltages,
said switching devices having means for operating in response to measurements of the fundamental frequency component of voltages, and
said tapswitch control devices having means for operating in response to measurements of the fundamental frequency component of vars
whereby errors due to harmonic frequency components of voltage and vars are eliminated.

**9.** A method of controlling voltages supplying electric power from substations through power distribution lines to users of electric power connected to said distribution lines, the method **characterised by** the steps of:

a) setting desired substation output voltages as the center of selected voltage bands,
b) integrating non linear functions of voltage excursions above and below said voltage band to determine response times for substation output voltage adjustments,
c) setting values of desired voltage regulation quality factors (VRQF) for substation output voltages, and
d) adaptively varying limits of said integrations so as to maintain said VRQFs at said desired values.

**10.** A method as in claim 9 further including the steps of:

a) setting the non linear functions of said voltage excursion to the square law function of voltage excursions between said voltage band and upper and lower voltage regulation limits, and
b) integrating said squares law functions of voltage excursions to determine said response times.

**11.** A method as in Claim 9 or Claim 10 further including the step of determining VRQFs as the square root of the sum of squares of voltage variations above and below said voltage band center settings.

**12.** A method as in Claim 9 or 10 or 11 further including the steps of:

a) determining a rate of substation output voltage adjustments as averaged over a period of at least one week, and

b) adaptively varying limits of said integrations so as to maintain a desired weekly rate of voltage adjustments as an alternative to maintaining a desired VRQF.

13. A method as in Claim 9, 10, 11 or 12 further including the steps of:

a) installing power factor correction capacitors at selected points along said power distribution lines, and

b) connecting and disconnecting said capacitors to said distribution lines in response to adaptive controls responsive to non linear excursions of voltages from selected voltages.

14. A method as in Claim 13 further including the steps of:

a) lowering said voltage bands to induce said capacitors to switch ON in response to measurements of excess over set limits of inductive vars flowing out of substations, and

b) raising said voltage bands to induce said capacitors to switch OFF in response to reduced inductive vars below set limits flowing out of substations

whereby the power factor at the substation output is regulated within desired limits.

15. A method as in any one of Claims 9 to 14 further including the step of controlling voltages in response to measurements of fundamental power frequency components.

16. A method as in any one of Claims 9 to 15 further including the step of said adaptive controls for connecting and disconnecting capacitors responding to measurements of fundamental power frequency components.

**Patentansprüche**

1. System bestehend aus Transformatoren (100) und Reglern (150), die Strom zu Verteilungsleitungen speisen, wobei die genannten Transformatoren (100) und Regler (150) die Ausgangsspannung ändernde Stufenschalter (104) aufweisen, wobei die genannten Stufenschalter (104) adaptive Steuergeräte (62) haben, die um einen Spannungsbandmittensollwert herum arbeiten, in Kombination umfassend:

Ausgabemittel (17) zum Senken von Stufenschaltern (104), wenn ein erstes Zeiteinstellmittel für Spannungen oberhalb des genannten Bandes zeitauslöst, und

Ausgabemittel (17) zum Heben von Stufenschaltern (104), wenn das genannte erste Zeiteinstellmittel (7) für Spannungen unterhalb des genannten Bandes zeitauslöst,

**dadurch gekennzeichnet, dass** das genannte erste Zeiteinstellmittel (7) nichtlineare Funktionen von Spannungshüben oberhalb und unterhalb des genannten Spannungsbandes integriert, um zeitauszulösen, wenn die genannte Integration eine adaptive Zeitgrenze überschreitet,

ein Messmittel (7) zum Ermitteln eines Spannungsregelungsqualitätsfaktors (VRQF) für die genannten Steuergeräte (62),

ein Mittel zum Eingeben eines gewünschten VRQF, und

ein Mittel zum Ändern der genannten Zeitgrenze des genannten ersten Zeiteinstellmittels, um den genannten gewünschten VRQF gemittelt über Zeiträume zu erhalten, die größer sind als die genannten Zeitgrenzen des genannten ersten Zeiteinstellmittels, so dass auf einen gewünschten VRQF geregelte Spannungen zu Stromverteilungsleitungen gespeist werden.

2. System nach Anspruch 1, ferner umfassend in Kombination:

einen Leistungsfaktorkorrekturkondensator (19), der durch Schaltgeräte (120) mit den genannten Verteilungsleitungen an gewählten Stellen entlang der genannten Leitungen verbunden ist, und

ein Steuermittel (139) für die genannten Schaltgeräte (120), das adaptiv auf nichtlineare Hübe von Leistungsspannungen auf den genannten Verteilungsleitungen von Zeitmittelwerten der genannten Spannungen von mehr als einer Woche anspricht,

so dass auf eine gewünschte Qualität geregelte Spannungen entlang der Verteilungsleitungen erhalten bleiben.

**3.** System nach Anspruch 1 oder 2, ferner umfassend in Kombination:

Mittel zum Messen von induktiven Blindleistungseinheiten (Var) (16, 141), die von den genannten Verteilungsleitungen in die genannten Transformatoren (100) und Regler (150) fließen,
Mittel (62) zum Senken des genannten Spannungsbandmittensollwertes, um das Einschalten der genannten Schaltgeräte durch das genannte Steuermittel auf Anforderung zum Reduzieren der genannten induktiven Vars zu induzieren, und
Mittel (62) zum Heben des genannten Spannungsbandmittensollwertes, um das Abschalten der genannten Schaltgeräte durch das genannte Steuermittel auf Anforderung zum Erhöhen der genannten induktiven Vars zu induzieren,

um dadurch den Blindleistungsfluss durch die Transformatoren und Regler zu regeln.

**4.** System nach Anspruch oder 2 oder 3, wobei der genannte Spannungsregelungsqualitätsfaktor der Mittelwert der Quadratwurzel der Summe der Quadratwurzeln der Spannungsabweichungen oberhalb und unterhalb des genannten Spannungsbandmittensollwertes ist.

**5.** System nach einem der Ansprüche 1 bis 4, ferner umfassend in Kombination:

Mittel (62) zum Ermitteln der Rate von Stufenschaltvorgängen gemittelt über einen Zeitraum von wenigstens einer Woche,
Mittel (62) zum Eingeben einer gewünschten Rate von Stufenschaltvorgängen, und
Mittel (62) zum Ändern der genannten adaptiven Zeitgrenze des genannten ersten Zeiteinstellmittels, um die genannte gewünschte Durchschnittsrate von Stufenschaltvorgängen als eine alternative Betriebsart zu der des Haltens eines gewünschten Spannungsregelungsqualitätsfaktors zu erzeugen.

**6.** System nach Anspruch 3, ferner umfassend in Kombination:

Mittel (62) zum Eingeben eines Var-Bandes in die genannten adaptiven Steuergeräte für Stufenschalter,
Mittel (62) zum Eingeben eines ersten Var-Band-Mittensollwertes,
ein zweites Zeiteinstellmittel (62), das auf eine nichtlineare Funktion von Var-Hüben außerhalb des genannten Var-Bandes reagiert,
Mittel (62) zum Senken des Spannungsband-Mittensollwertes von dem genannten ersten gewählten Wert auf einen zweiten gewählten Wert, wenn die genannten induktiven Vars das Var-Band überschreiten,
wobei die genannten adaptiven Steuergeräte (62) für Stufenschalter die Transformator- und Reglerspannungen automatisch in das genannte zweite Spannungsband senken,
wobei die genannten Schaltelemente (139) automatisch Kondensatoren einschalten, um die in die Transformatoren und Regler fließenden induktiven Vars zu reduzieren,
Mittel (62) zum Zurückbringen des Spannungssollwertes auf den genannten ersten gewählten Wert, wenn die Vars in das Var-Band zurückkehren,
Mittel (62) zum Heben des Spannungssollwertes von dem genannten ersten gewählten Wert auf einen dritten gewählten Wert, wenn die genannten induktiven Vars niedriger sind als das Var-Band,
wobei die genannten adaptiven Stufenschaltgeräte (62) die Transformator- und Reglerspannungen automatisch in das genannte dritte Spannungsband heben,
wobei die genannten Schaltelemente (139) die Kondensatoren automatisch abschalten, um die in die Transformatoren und Regler fließenden induktiven Vars zu erhöhen,
Mittel (62) zum Zurückbringen des Spannungssollwertes auf den genannten ersten gewählten Wert, wenn die Vars in das Var-Band zurückkehren,
Mittel (62) zum Ermitteln der Rate des Schaltens von Spannungsbändern,
Mittel (62) zum Eingeben einer gewünschten Rate des Schaltens von Spannungssollwerten,
ein zweites Zeiteinstellmittel (62), das nichtlineare Funktionen von Var-Hüben oberhalb und unterhalb des genannten Var-Bandes integriert, um oberhalb einer Zeitgrenze zeitauszulösen, und
Mittel (62) zum Ändern der genannten Integrationszeitgrenze des genannten zweiten Zeiteinstellmittels, um die genannte gewünschte Rate des Schaltens von Spannungssollwerten zu erzeugen,
so dass Vars und Spannungsregelungsqualitätsfaktor geregelt werden.

7. System nach Anspruch 3, ferner umfassend in Kombination:

Mittel zum Eingeben eines Var-Bandes in die genannten adaptiven Steuergeräte für Stufenschalter,

Mittel zum Eingeben eines ersten Var-Band-Mittensollwertes,

ein zweites Zeiteinstellmittel (62), das auf eine nichtlineare Funktion von Var-Hüben außerhalb des genannten Var-Bandes reagiert,

Mittel (62) zum Senken des Spannungsband-Mittensollwertes von dem genannten ersten gewählten Wert auf einen zweiten gewählten Wert, wenn die genannten induktiven Vars das Var-Band überschreiten,

wobei die genannten adaptiven Steuergeräte (62) für Stufenschalter die Transformator- und Reglerspannungen automatisch in das genannte zweite Spannungsband senken,

wobei die genannten Schaltelemente (139) Kondensatoren (119) automatisch einschalten, um die in die Transformatoren und Regler fließenden induktiven Vars zu reduzieren,

Mittel (62) zum Zurückbringen des Spannungssollwertes auf den genannten ersten gewählten Wert, wenn die Vars in das Var-Band zurückkehren,

Mittel (62) zum Heben des Spannungssollwertes von dem genannten ersten gewählten Wert auf einen dritten gewählten Wert, wenn die genannten induktiven Vars niedriger sind als das Var-Band,

wobei die genannten adaptiven Stufenschaltgeräte (62) die Transformator- und Reglerspannungen automatisch in das genannte dritte Spannungsband heben,

wobei die genannten Schaltelemente (139) Kondensatoren (119) automatisch abschalten, um die in die Transformatoren und Regler fließenden induktiven Vars zu erhöhen,

Mittel (62) zum Zurückbringen des Spannungssollwertes auf den genannten ersten gewählten Wert, wenn die Vars in das Var-Band zurückkehren,

Mittel (62) zum Ermitteln der Rate des Schaltens von Spannungsbändern,

Mittel (62) zum Eingeben einer gewünschten Rate des Schaltens von Spannungssollwerten, und

ein zweites Zeiteinstellmittel (62), das nichtlineare Funktionen von Var-Hüben oberhalb und unterhalb des genannten Var-Bandes integriert, um jenseits einer Zeitgrenze zeitauszulösen,

so dass Vars sowie die Rate der Durchführung von Stufenumschaltungen geregelt wird.

8. System nach Anspruch 3, ferner umfassend in Kombination:

die genannten adaptiven Steuergeräte (62) für Stufenschalter weisen Mittel auf, um als Reaktion auf Messungen der Grundfrequenzkomponente von Spannungen zu arbeiten,

die genannten Schaltgeräte weisen Mittel auf, um als Reaktion auf Messungen der Grundfrequenzkomponente von Spannungen zu arbeiten, und

die genannten Stufenschaltersteuergeräte weisen Mittel auf, um als Reaktion auf Messungen der Grundfrequenzkomponente von Vars zu arbeiten,

so dass Fehler aufgrund von Oberwellenfrequenzkomponenten von Spannung und Vars eliminiert werden.

9. Verfahren zum Regeln von Spannungen beim Speisen von elektrischer Leistung von Schaltstationen durch Stromverteilungsleitungen zu an den genannten Verteilungsleitungen angeschlossenen Abnehmern von elektrischer Leistung, wobei das Verfahren durch die folgenden Schritte gekennzeichnet ist:

a) Einstellen der gewünschten Schaltstation-Ausgangsspannungen als die Mitte von gewählten Spannungsbändern,

b) Integrieren von nichtlinearen Funktionen von Spannungshüben oberhalb und unterhalb des genannten Spannungsbandes, um Ansprechzeiten für Schaltstation-Ausgangsspannungsjustagen zu ermitteln,

c) Einstellen von Werten von gewünschten Spannungsregelungsqualitätsfaktoren (VRQF) für Schaltstation-Ausgangsspannungen, und

d) adaptives Variieren von Grenzen der genannten Integrationen, um die genannten VRQFs auf den gewünschten Werten zu halten.

10. Verfahren nach Anspruch 9, ferner umfassend die folgenden Schritte:

a) Einstellen der nichtlinearen Funktionen des genannten Spannungshubs auf die quadratische Funktion von Spannungshüben zwischen dem genannten Spannungsband und der oberen und unteren Spannungsregelungsgrenze, und

b) Integrieren der genannten quadratischen Funktionen von Spannungshüben zum Ermitteln der genannten Ansprechzeiten.

**11.** Verfahren nach Anspruch 9 oder Anspruch 10, ferner beinhaltend den Schritt des Ermittelns von VRQFs als die Quadratwurzel der Summe von Quadraten von Spannungsvariationen oberhalb und unterhalb der genannten Spannungsbandmitteneinstellungen.

**12.** Verfahren nach Anspruch 9 oder 10 oder 11, ferner beinhaltend die folgenden Schritte:

a) Ermitteln einer Rate von Schaltstation-Ausgangsspannungsjustagen im Mittel über eine Periode von wenigstens einer Woche, und
b) adaptives Variieren von Grenzen der genannten Integrationen, um eine gewünschte wöchentliche Rate von Spannungsjustagen als Alternative zur Haltung eines gewünschten VRQF zu halten.

**13.** Verfahren nach Anspruch 9, 10, 11 oder 12, ferner umfassend die folgenden Schritte:

a) Installieren von Leistungsfaktor-Korrekturkondensatoren an ausgewählten Stellen entlang der genannten Stromverteilungsleitungen, und
b) Verbinden und Abtrennen der genannten Kondensatoren mit/von den genannten Verteilungsleitungen als Reaktion auf adaptive Regeleingriffe, die auf nichtlineare Hübe von Spannungen von gewählten Spannungen ansprechen.

**14.** Verfahren nach Anspruch 13, ferner beinhaltend die folgenden Schritte:

a) Senken der genannten Spannungsbänder, um das Einschalten der genannten Kondensatoren als Reaktion auf Messungen von Hüben oberhalb der Sollgrenzen von aus den Schaltstationen fließenden induktiven Vars zu induzieren, und
b) Heben der genannten Spannungsbänder, um ein Abschalten der genannten Kondensatoren als Reaktion auf reduzierte induktive Vars unterhalb der aus den Schaltstationen fließenden Sollgrenzen zu induzieren,

so dass der Leistungsfaktor am Schaltstationsausgang innerhalb von gewünschten Grenzen reguliert wird.

**15.** Verfahren nach einem der Ansprüche 9 bis 14, das ferner den Schritt des Regelns von Spannungen als Reaktion auf Messungen von Grundleistungsfrequenzkomponenten beinhaltet.

**16.** Verfahren nach einem der Ansprüche 9 bis 15, das ferner den Schritt der genannten adaptiven Regeleingriffe zum Verbinden und Abtrennen von Kondensatoren als Reaktion auf Messungen von Grundleistungsfrequenzkomponenten beinhaltet.

**Revendications**

**1.** Système constitué de transformateurs (100) et de régulateurs (150) fournissant l'énergie électrique à des lignes de distribution, lesdits transformateurs (100) et régulateurs (150) ayant des commutateurs à prises multiples de changement de tension de sortie (104), lesdits commutateurs à prises multiples (104) ayant des dispositifs de commande adaptative (62) fonctionnant autour d'un point de consigne central de bande de tension comprenant, en combinaison :

un moyen de sortie (17) pour abaisser les commutateurs à prises multiples (104) lorsqu'un premier moyen de temporisation se déclenche pour les tensions au-dessus de ladite bande, et
un moyen de sortie (17) pour élever les commutateurs à prises multiples (104) lorsque ledit premier moyen de temporisation (7) se déclenche pour les tensions en dessous de ladite bande,

**caractérisé en ce que** ledit premier moyen de temporisation (7) intègre des fonctions non linéaires des excursions de tension au-dessus et en dessous de ladite bande de tension de manière à se déclencher lorsque ladite intégration dépasse une limite de temporisation adaptative,
un moyen de mesure (7) pour déterminer un facteur de qualité de régulation de tension (FQRT) pour lesdits dispositifs de commande (62),
un moyen pour entrer un FQRT voulu, et
un moyen pour changer ladite limite de temporisation dudit premier moyen de temporisation de manière à obtenir ledit FQRT voulu en tant que moyenne dans des temps supérieurs aux dites limites de temps dudit premier moyen de temporisation, grâce à quoi des tensions régulées à un FQRT voulu sont fournies à des lignes de distribution de courant.

2. Système selon la revendication 1 comprenant en outre, en combinaison :

un moyen formant condensateur de correction de puissance (19) connecté par l'intermédiaire de dispositifs de commutation (120) aux dites lignes de distribution à des points sélectionnés le long desdites lignes, et
un moyen de commande (139) pour lesdits dispositifs de commutation (120) réagissant de manière adaptative aux excursions non linéaires de tensions d'alimentation sur lesdites lignes de distribution à partir de moyennes de temps supérieures à une semaine desdites tensions
grâce à quoi des tensions régulées à une qualité voulue sont maintenues le long des lignes de distribution.

3. Système selon la revendication 1 ou 2, comprenant en outre, en combinaison :

un moyen pour mesurer les vars en retard (16, 141) entrant dans lesdits transformateurs (100) et régulateurs (150) depuis lesdites lignes de distribution,
un moyen (62) pour abaisser ledit point de consigne central de bande de tension de manière à entraîner l'activation desdits dispositifs de commutation par ledit moyen de commande lorsqu'il est nécessaire de réduire lesdits vars en retard, et
un moyen (62) pour élever ledit point de consigne central de bande de tension de manière à entraîner la désactivation desdits dispositifs de commutation par ledit moyen de commande lorsqu'il est nécessaire d'augmenter lesdits vars en retard
pour réguler ainsi la circulation des vars à travers les transformateurs et les régulateurs.

4. Système selon la revendication 2 ou 3, dans lequel ledit facteur de qualité de régulation de tension est la moyenne de la racine carrée de la somme des carrés des écarts de tension au-dessus et en dessous dudit point de consigne central de bande de tension.

5. Système selon l'une quelconque des revendications 1 à 4, comprenant en outre, en combinaison :

un moyen (62) pour déterminer le taux d'opérations des commutateurs à prises multiples en tant que moyenne sur une durée d'au moins une semaine,
un moyen (62) pour entrer un taux voulu d'opérations des commutateurs à prises multiples, et
un moyen (62) pour changer ladite limite de temps adaptative dudit premier moyen de temporisation de manière à produire ledit taux moyen voulu d'opérations des commutateurs à prises multiples en tant qu'autre mode possible de fonctionnement que celui de maintenir un facteur de qualité de régulation de tension voulu.

6. Système selon la revendication 3, comprenant en outre, en combinaison :

un moyen (62) pour entrer une bande de vars dans lesdits dispositifs de commande adaptative pour les commutateurs à prises multiples,
un moyen (62) pour entrer un premier point de consigne central de bande de vars,
un second moyen de temporisation (62) réagissant à une fonction non linéaire d'excursions de vars à l'extérieur de ladite bande de vars,
un moyen (62) pour abaisser le point de consigne central de bande de tension de ladite première valeur sélectionnée à une seconde valeur sélectionnée lorsque lesdits vars en retard dépassent la bande de vars,
lesdits dispositifs de commande adaptative (62) pour les commutateurs à prises multiples abaissant automatiquement les tensions des transformateurs et régulateurs pour les faire entrer dans ladite seconde bande de tension,
lesdites commandes de commutateurs (139) activant automatiquement les condensateurs de manière à réduire les vars en retard entrant dans les transformateurs et régulateurs,
un moyen (62) pour ramener le point de consigne de tension à ladite première valeur sélectionnée lorsque les vars retournent dans la bande de vars,
un moyen (62) pour élever le point de consigne de tension de ladite première valeur sélectionnée à une troisième valeur sélectionnée lorsque lesdits vars en retard sont inférieurs à la bande de vars,
lesdits dispositifs commutateurs à prises multiples adaptatifs (62) élevant automatiquement les tensions des transformateurs et des régulateurs pour les faire entrer dans ladite troisième bande de tension,
lesdites commandes de commutateurs (139) désactivant automatiquement les condensateurs de manière à augmenter les vars en retard entrant dans les transformateurs et les régulateurs,

un moyen (62) pour ramener le point de consigne de tension à ladite première valeur sélectionnée lorsque les vars retournent à l'intérieur de la bande de vars,

un moyen (62) pour déterminer le taux de commutation des bandes de tension,

un moyen (62) pour entrer un taux voulu de points de consigne de tension de commutation,

un second moyen de temporisation (62) intégrant les fonctions non linéaires d'excursions des vars au-dessus et en dessous de ladite bande de vars de manière à se déclencher au-dessus d'une limite de temporisation, et

un moyen (62) pour changer ladite limite de temps d'intégration dudit deuxième temporisateur afin de produire ledit taux voulu de points de consigne de tension de commutation

grâce à quoi les vars ainsi que le facteur de qualité de régulation de tension sont contrôlés.

7. Système selon la revendication 3, comprenant en outre, en combinaison :

un moyen pour entrer une bande de vars dans lesdits dispositifs de commande adaptative pour les commutateurs à prises multiples,

un moyen pour entrer un premier point de consigne central de bande de vars,

un second moyen de temporisation (62) réagissant à une fonction non linéaire d'excursions de vars hors de ladite bande de vars,

un moyen (62) pour abaisser le point de consigne central de bande de tension de ladite première valeur sélectionnée à une seconde valeur sélectionnée lorsque lesdits vars en retard dépassent la bande de vars,

lesdits dispositifs de commande adaptative (62) pour commutateurs à prises multiples abaissant automatiquement les tensions des transformateurs et des régulateurs pour les faire entrer dans ladite seconde bande de tension,

lesdites commandes de commutateurs (139) activant automatiquement les condensateurs (119) de manière à réduire les vars en retard entrant dans les transformateurs et les régulateurs,

un moyen (62) pour ramener le point de consigne de tension à ladite première valeur sélectionnée lorsque les vars retournent à l'intérieur de la bande de vars,

un moyen (62) pour élever le point de consigne de tension de ladite première valeur sélectionnée à une troisième valeur sélectionnée lorsque lesdits vars en retard sont inférieurs à la bande de vars,

lesdits dispositifs commutateurs à prises multiples adaptatifs (62) élevant automatiquement les tensions des transformateurs et des régulateurs dans ladite troisième bande de tension,

lesdites commandes de commutateurs (139) désactivant automatiquement les condensateurs (119) de manière à augmenter les vars en retard entrant dans les transformateurs et les régulateurs,

un moyen (62) pour ramener le point de consigne de tension à ladite première valeur sélectionnée lorsque les vars retournent à l'intérieur de la bande de vars,

un moyen (62) pour déterminer le taux de bandes de tension de commutation,

un moyen (62) pour entrer un taux voulu de points de consigne de tension de commutation, et

un second moyen de temporisation (62) intégrant les fonctions non linéaires d'excursions de vars au-dessus et en dessous de ladite bande de vars de manière à se déclencher au-dessus d'une limite de temporisation

grâce à quoi les vars ainsi que la vitesse d'exécution des changements de prises sont contrôlés.

8. Système selon la revendication 3, comprenant en outre, en combinaison,

lesdits dispositifs de commande adaptative (62) pour les commutateurs à prises multiples ayant des moyens pour fonctionner en réponse à des mesures de la composante fréquence fondamentale des tensions,

lesdits dispositifs de commutation ayant des moyens pour fonctionner en réponse à des mesures de la composante fréquence fondamentale des tensions, et

lesdits dispositifs de commande de commutateurs à prises multiples ayant des moyens pour fonctionner en réponse à des mesures de la composante fréquence fondamentale des vars

grâce à quoi les erreurs dues aux composantes fréquence harmonique de tension et de vars sont éliminées.

9. Procédé de contrôle des tensions fournissant le courant électrique provenant de sous-stations, par des lignes de distribution électrique, aux utilisateurs d'énergie électrique connectés aux dites lignes de distribution, le procédé étant **caractérisé par** les étapes consistant à :

a) définir les tensions de sortie de sous-stations voulues comme centre de bandes de tension sélectionnées,

b) intégrer les fonctions non linéaires d'excursions de tension au-dessus et en dessous de ladite bande de tension pour déterminer les temps de réponse pour les réglages de tension de sortie des sous-stations,

c) fixer les valeurs des facteurs de qualité de régulation de tension (FQRT) voulus pour les tensions de sortie des sous-stations, et
d) faire varier de façon adaptative les limites desdites intégrations de manière à maintenir lesdits FQRT aux dites valeurs voulues.

**10.** Procédé selon la revendication 9, comprenant en outre les étapes consistant à :

a) fixer les fonctions non linéaires de ladite excursion de tension à la fonction quadratique des excursions de tension entre ladite bande de tension et lesdites limites de régulation de tension supérieure et inférieure, et
b) intégrer lesdites fonctions quadratiques des excursions de tension pour déterminer lesdits temps de réponse.

**11.** Procédé selon la revendication 9 ou la revendication 10, comprenant en outre l'étape de détermination des FQRT en tant que racine carrée de la somme des carrés des variations de tension au-dessus et en dessous desdits centres de bande de tension définis.

**12.** Procédé selon la revendication 9, 10 ou 11, comprenant en outre les étapes consistant à :

a) déterminer un taux de réglages de tension de sortie des sous-stations en tant que moyenne sur une période d'au moins une semaine, et
b) faire varier de manière adaptative les limites desdites intégrations de manière à maintenir un taux hebdomadaire voulu de réglages de tension au lieu de maintenir un FQRT voulu.

**13.** Procédé selon la revendication 9, 10, 11 ou 12, comprenant en outre les étapes consistant à :

a) installer des condensateurs de correction de facteur de puissance à des points sélectionnés le long desdites lignes de distribution électrique, et
b) connecter et déconnecter lesdits condensateurs aux dites lignes de distribution en réponse à des commandes adaptatives réagissant aux excursions de tensions non linéaires des tensions sélectionnées.

**14.** Procédé selon la revendication 13, comprenant en outre les étapes consistant à :

a) abaisser lesdites bandes de tension pour provoquer l'activation desdits condensateurs en réponse aux mesures d'excès au-dessus des limites fixées de vars inductifs circulant hors des sous-stations, et
b) élever lesdites bandes de tension pour provoquer la désactivation desdits condensateurs en réponse aux vars inductifs réduits en dessous de limites fixées circulant hors des sous-stations

grâce à quoi le facteur de puissance à la sortie des sous-stations est régulé dans des limites voulues.

**15.** Procédé selon l'une quelconque des revendications 9 à 14, comprenant en outre l'étape de régulation des tensions en réponse à des mesures de composantes fréquence-puissance fondamentales.

**16.** Procédé selon l'une quelconque des revendications 9 à 15, comprenant en outre l'étape de réponse desdites commandes adaptatives pour connecter et déconnecter les condensateurs à des mesures de composantes fréquence-puissance fondamentales.

3-PHASE LOAD TAPCHANGING TRANSFORMER 100 } SINGLE PHASE SHOWN

DISTRIBUTION POWERLINES

PHASE 3

TO TRANSFORMER 100

PHASE 2

101

102 113 104 103 106 16

PHASE 1

118 116 117 120 VAC 141

NEUTRAL 143

142 138

107 140

12 CURRENT I2
CURRENT I1
VOLTAGE E

120 120 120

108 COUNTER

119 119 119

SC
C

105

ADAPTIVE TAPCHANGER CONTROL (ATC)

N H

MOTOR M 114 109 111

121 121 121

C ADAPTIVE CAPACITOR CONTROL

R
RR

124 124 124

O

OUTPUTS

115 110 112

L
RL

122 122 122

RR
LR
N

123 123 123

139

143 62

Fig. 1 POWER DISTRIBUTION SUBSTATION

TYPICAL POLE-TOP CAPACITOR INSTALLATION

Fig. 2

**Fig. 3**  POWER DISTRIBUTION SUBSTATION    TYPICAL POLE-TOP CAPACITOR INSTALLATION

EP 0 923 181 B1

EP 0 923 181 B1

Fig. 4

35

FIG. 5

FIG. 6

FIG. 7

195
IDEAL POWER FREQUENCY WAVE

196
TYPICAL DIGITAL SAMPLES OUTPUT BY ADC

WAVE SUPPRESSED TO
PROTECT ADC

TIME AXIS

SAMPLES
SUPPRESSED
TO ZERO

SIGNAL VOLTAGE

+

–

a

a'

ONE CYCLE OF POWER FREQUENCY

Fig. 8

FIG. 9

FIG. 10

EP 0 923 181 B1

FIG. 11

FIG. 12

Fig. 13

Fig. 14

EP 0 923 181 B1

Fig. 15

46

**Fig. 16**

Fig. 17

Fig. 18

Fig. 19

Fig. 20

Fig. 21

Fig. 22

Fig. 23

Fig 24

EP 0 923 181 B1

Fig. 25

EP 0 923 181 B1

Fig. 27

Fig. 26

56